# EUROPEAN PATENT APPLICATION

(11) **EP 4 494 475 A1**
(43) Date of publication of application: **22.01.2025**
(21) Application number: 23770697.3
(22) Date of filing: 10.03.2023
(51) Int. Cl.: A23J 3/00, A23J 3/14, A23J 3/22, A23L 29/20, A23L 29/231, A23L 29/256, A23L 13/00, A23L 13/60

(54) **METHOD FOR PRODUCING CLUMPED MEAT-LIKE MEAT ALTERNATIVE AND CLUMPED MEAT-LIKE MEAT ALTERNATIVE**

(30) Priority: 15.03.2022 JP 2022040837; 15.03.2022 JP 2022040838; 26.10.2022 JP 2022171764
(71) Applicant: FUJIFILM Corporation, Tokyo 106-8620 (JP)
(72) Inventor: TSUKAMOTO, Naoki, Ashigarakami-gun, Kanagawa 258-8577 (JP); MATSUNO, Ryo, Ashigarakami-gun, Kanagawa 258-8577 (JP)
(74) Representative: HGF
(86) International application number: PCT/JP2023/009450
(87) International publication number: WO 2023/176742

(57) **Abstract**

A chunk meat-like meat alternative and a method of producing the same, the method including: mixing a fiber bundle-shaped textured protein and a binder to obtain a mixture; and stretching the mixture to obtain a stretched mixture having a degree of orientation of a fiber direction of the fiber bundle-shaped textured protein in a cross section along a direction of the stretching of 1.1 or more.

## Description

### Technical Field

The present disclosure relates to a method of producing a chunk meat-like meat alternative and a chunk meat-like meat alternative.

### Background Art

Livestock meat is a food material widely consumed in the world. However, from the viewpoint of environment and maintaining health, attempts have been made to refrain from intake of livestock meat and instead to intake meat-like food (hereinafter, also referred to as "meat alternative") a raw material of which is a vegetable protein derived from a plant such as soybean. Accordingly, meat alternatives and methods of producing meat alternatives have been developed.

Japanese Patent Publication (JP-B) No. S56-26381 proposes "a method of producing a fibrous high protein food having excellent heat softening resistance and storage stability, the method including molding a protein mixed solution containing a milk protein or a mixture obtained by adding a fat and/or carbohydrate to the protein mixed solution into a fibrous shape, and then fixing the molded product at a pH of from 2.5 to 6.5 and a temperature of from 90 to 130°C for from 20 minutes to 3 hours in a salt bath containing at least one of a K salt, a Na salt, or a Ca salt at a total cation concentration of from 0.3 to 6 gr equivalent/L and further containing a compound having an aldehyde group or an aldehydic reducing group at from 0.01 to 200 gr equivalent/L in terms of a compound".

Japanese Patent Publication (JP-B) No. S58-2655 proposes "a fibrous reconstituted food obtained by: adding, to a protein group mainly composed of a wheat protein, a polymer polysaccharide in an amount of from 40% to 400% with respect to the amount of proteins of the protein group, a common salt, a protein relaxant, and a glucoside-binding degrading enzyme; kneading the mixture to obtain a kneaded product; and spreading and stretching the obtained kneaded product to form a fibrous product, and alternatively further heat-treating the fibrous product".

Japanese Patent Application Laid-Open (JP-A) No. S62-181742 proposes "a method of producing a protein fibrous food, the method including: performing extrusion cooking of a protein or a protein-containing raw material with a twin screw extrusion cooking apparatus to obtain a textured protein sheet; and rolling the sheet".

Japanese Patent Application Laid-Open (JP-A) No. H7-8177 proposes "a method of producing a meat-like protein food, the method including: a step of mixing a raw material containing at least protein and water in a mixing container while heating and pressurizing the mixture; a step of extruding the mixture obtained in the mixing step from the mixing container while cooling and imparting orientation to obtain a protein material; and a step of compression-molding the protein material while heating the protein material, in which a supply amount of water to be mixed in the mixing container is adjusted so that the protein material includes water at an amount of from 30 to 70 parts by weight with respect to 100 parts by weight of the protein material".

### SUMMARY OF INVENTION

### Technical Problem

A problem to be solved by an embodiment of the disclosure is to provide a production method which enables to obtain a chunk meat-like meat alternative an appearance before and after cooking of which, an appearance of a cross section after cooking of which, and a texture after cooking of which are close to those of livestock meat.

Another problemto be solved by another embodiment of the disclosure is to provide a chunk meat-like meat alternative an appearance before and after cooking of which, an appearance of a cross section after cooking of which and a texture after cooking of which are close to those of livestock meat.

### Solution to Problem

Means for solving the above-described problems includes the following embodiments.
<1> A method of producing a chunk meat-like meat alternative, the method comprising:
   a first step of mixing a fiber bundle-shaped textured protein and a binder to obtain a mixture; and
   a second step of stretching the mixture to obtain a stretched mixture having a degree of orientation of a fiber direction of the fiber bundle-shaped textured protein in a cross section along a direction of the stretching of 1.1 or more.
<2> The method of producing a chunk meat-like meat alternative according to <1>, wherein the stretched mixture obtained by the second step has a stretch ratio of 2 or more.
<3> The method of producing a chunk meat-like meat alternative according to <1> or <2>, further comprising, after the second step, a third step comprising: molding the stretched mixture to obtain a molded product; and heating the molded product to harden the molded product.
<4> The method of producing a chunk meat-like meat alternative according to any one of <1> to <3>, wherein the binder comprises a thermally reversible gel-forming polysaccharide and a thermally irreversible gel-forming polysaccharide.
<5> The method of producing a chunk meat-like meat alternative according to any one of <1> to <4>, wherein the second step comprises stretching the mixture in a direction perpendicular to a plane including a rotation axis of a set of rollers by pressing the mixture by passing the mixture through a region surrounded by the set of rollers in the direction perpendicular to the plane including the rotation axis of the set of rollers.
<6> The method of producing a chunk meat-like meat alternative according to any one of <1> to <5>, wherein the second step comprises stretching the mixture in a direction parallel to a rotation axis of a set of rollers by pressing the mixture by placing the mixture between the set of rollers having parallel rotation axes and rotating in the same direction and reducing a distance between the set of rollers while rotating the mixture.
<7> The method of producing a chunk meat-like meat alternative according to <6>, wherein each roller has an uneven surface with a shape of a spiral, the spiral moving from a center of the roller in a rotation axis direction to both ends of the roller in the rotation axis direction while the roller rotates.
<8> The method of producing a chunk meat-like meat alternative according to any one of <1> to <4>, wherein the second step comprises stretching the mixture by gripping and pulling a surface of the mixture.
<9> The method of producing a chunk meat-like meat alternative according to any one of <1> to <4>, wherein the second step comprises stretching the mixture by pressing the mixture with a plate.
<10> The method of producing a chunk meat-like meat alternative according to any one of <5> to <7>, wherein the second step comprises stretching the mixture by passing the mixture through a plurality of sets of rollers arranged in one direction.
<11> The method of producing a chunk meat-like meat alternative according to any one of <1> to <10>, wherein the second step comprises an operation comprising stretching the mixture, cutting the stretched mixture, stacking the stretched mixture cuttings so as to be aligned longitudinally, and stretching the stacked stretched mixture cuttings again.
<12> The method of producing a chunk meat-like meat alternative according to any one of <3> to <11>, wherein the third step comprises: a step of cutting the stretched mixture perpendicularly to an orientation direction of fibers; and a step of bundling a plurality of stretched mixtures before cutting or after cutting.
<13> A chunk meat-like meat alternative comprising a fiber bundle-shaped textured protein and a binder,
   a degree of orientation of a fiber direction of the fiber bundle-shaped textured protein in a cross section parallel to a fiber axis direction of the fiber bundle-shaped textured protein being 1.1 or more, and
   an integrated degree of orientation of the fiber direction in a cross section perpendicular to the fiber axis direction of the fiber bundle-shaped textured protein being less than 1.4.
<14> A chunk meat-like meat alternative comprising a fiber bundle-shaped textured protein and a binder,
   an integrated degree of orientation of a fiber direction of the fiber bundle-shaped textured protein in a cross section parallel to a fiber axis direction of the fiber bundle-shaped textured protein being 1.1 or more, and
   an integrated degree of orientation of the fiber direction in a cross section perpendicular to the fiber axis direction of the fiber bundle-shaped textured protein being less than 1.4.
<15> A chunk meat-like meat alternative comprising a fiber bundle-shaped textured protein and a binder,
   a standard deviation of an orientation angle of a fiber direction of the fiber bundle-shaped textured protein in a cross section parallel to a fiber axis direction of the fiber bundle-shaped textured protein being 20 or less, and
   an integrated degree of orientation of the fiber direction in a cross section perpendicular to the fiber axis direction of the fiber bundle-shaped textured protein being less than 1.4.

### Advantageous Effects of Invention

According to an embodiment of the disclosure, a production method which enables to obtain a chunk meat-like meat alternative an appearance before and after cooking of which, an appearance of a cross section after cooking of which and a texture after cooking of which are close to those of livestock meat is provided.

According to another embodiment of the disclosure, a chunk meat-like meat alternative an appearance before and after cooking of which, an appearance of a cross section after cooking of which and a texture after cooking of which are close to those of livestock meat is obtained.

### BRIEF DESCRIPTION OF DRAWINGS

Fig. 1 is a schematic perspective view showing an example of an arrangement mode of a roller set.
Fig. 2 is a schematic perspective view showing another example of the arrangement mode of the roller set.
Fig. 3 is a schematic perspective view showing another example of the arrangement mode of the roller set.
Fig. 4 is a schematic perspective view showing another example of the arrangement mode of the roller set.
Fig. 5 is a schematic front view showing an example of a mold.
Fig. 6 is a schematic perspective view showing an example of a chunk meat-like meat alternative according to the disclosure.
Fig. 7 is a schematic front view showing an example of a cross section of the chunk meat-like meat alternative according to the disclosure.
Fig. 8 is a schematic front view showing another example of the cross section of the chunk meat-like meat alternative according to the disclosure.
Fig. 9 is a schematic perspective view showing an example of an arrangement mode of a roller and a guide.

### MODE FOR CARRYING OUT THE INVENTION

Hereinafter, embodiments that are examples of the disclosure will be described. These descriptions and examples illustrate embodiments and do not limit the scope of the invention.

With regard to the stepwise numerical ranges described in the disclosure, the upper limit value or the lower limit value described in one numerical range may be replaced with the upper limit value or the lower limit value of another stepwise numerical range. In the numerical ranges described herein, upper limit values or lower limit values of the numerical value ranges may be replaced with values described in Examples.

Each component may contain a plurality of kinds of corresponding substances.

In a case in which a plurality of kinds of substances corresponding to each component are present in a composition, unless otherwise specified, the amount of each component in the composition means the total amount of the plurality of substances present in the composition.

The term "step" includes not only an independent step, but also a step that can achieve a predetermined action of the step even in the case of being not clearly distinguished from other steps.

Components denoted by the same reference signs in each of the drawings mean the same components.

In the disclosure, a combination of two or more preferred aspects is a more preferred aspect.

### <Chunk Meat-Like Meat Alternative>

A chunk meat-like meat alternative according to a first embodiment of the disclosure contains a fiber bundle-shaped textured protein and a binder, and has a degree of orientation of a fiber direction in a cross section parallel to a fiber axis direction of the fiber bundle-shaped textured protein of 1.1 or more.

Due to the above-described configuration, the chunk meat-like meat alternative according to the disclosure becomes close to livestock meat in terms of an appearance before and after cooking, an appearance of a cross section after cooking, and a texture after cooking. The reason is presumed as follows.

Since the fiber bundle-shaped textured protein is bound by the binder, and the degree of orientation of a fiber direction in a cross section parallel to a fiber axis direction of the fiber bundle-shaped textured protein is 1.1 or more, the appearance, cross section and the texture of the chunk meat-like meat alternative tend to be close to those of livestock meat.

Therefore, it is presumed that the appearance before and after cooking, the appearance of the cross section after cooking, and the texture after cooking of the chunk meat-like meat alternative according to the disclosure becomes close to those of livestock meat.

A chunk meat-like meat alternative according to a second embodiment of the disclosure contains a fiber bundle-shaped textured protein and a binder, has a degree of orientation of a fiber direction of the fiber bundle-shaped textured protein in a cross section parallel to a fiber axis direction of the fiber bundle-shaped textured protein of 1.1 or more, and has an integrated degree of orientation of the fiber direction in a cross section perpendicular to the fiber axis direction of the fiber bundle-shaped textured protein of less than 1.4.

Since the fiber bundle-shaped textured protein is bound by a binder, the degree of orientation of the fiber direction of the fiber bundle-shaped textured protein in the cross section parallel to the fiber axis direction of the fiber bundle-shaped textured protein is 1.1 or more, and the integrated degree of orientation of the fiber direction of the fiber bundle-shaped textured protein in the cross section perpendicular to the fiber axis direction of the fiber bundle-shaped textured protein is less than 1.4, the fiber axis directions of the fiber bundle-shaped textured proteins are aligned and the appearance, the cross section and the texture of the chunk meat-like meat alternative tend to be close to those of livestock meat.

A chunk meat-like meat alternative according to a third embodiment of the disclosure contains a fiber bundle-shaped textured protein and a binder, has an integrated degree of orientation of a fiber direction of the fiber bundle-shaped textured protein in a cross section parallel to a fiber axis direction of the fiber bundle-shaped textured protein of 1.1 or more, and has an integrated degree of orientation of the fiber direction of the fiber bundle-shaped textured protein in a cross section perpendicular to the fiber axis direction of the fiber bundle-shaped textured protein of less than 1.4.

Since the fiber bundle-shaped textured protein is bound by a binder, the integrated degree of orientation of the fiber direction of the fiber bundle-shaped textured protein in the cross section parallel to the fiber axis direction of the fiber bundle-shaped textured protein is 1.1 or more, and the integrated degree of orientation of the fiber direction of the fiber bundle-shaped textured protein in the cross section perpendicular to the fiber axis direction of the fiber bundle-shaped textured protein is less than 1.4, the fiber axis directions of the fiber bundle-shaped textured proteins are aligned and the appearance, the cross section and the texture of the chunk meat-like meat alternative tend to be close to those of livestock meat.

A chunk meat-like meat alternative according to a fourth embodiment of the disclosure contains a fiber bundle-shaped textured protein and a binder, has a standard deviation of an orientation angle of a fiber direction of the fiber bundle-shaped textured protein in a cross section parallel to a fiber axis direction of the fiber bundle-shaped textured protein of 20 or less, and has an integrated degree of orientation of the fiber direction of the fiber bundle-shaped textured protein in a cross section perpendicular to the fiber axis direction of the fiber bundle-shaped textured protein of less than 1.4.

Since the fiber bundle-shaped textured protein is bound by a binder, the standard deviation of the fiber direction of the fiber bundle-shaped textured protein in the cross section parallel to the fiber axis direction of the fiber bundle-shaped textured protein is 20 or less, and the integrated degree of orientation of the fiber direction of the fiber bundle-shaped textured protein in the cross section perpendicular to the fiber axis direction of the fiber bundle-shaped textured protein is less than 1.4, the fiber axis directions of the fiber bundle-shaped textured proteins are aligned and the appearance, the cross section, and the texture of the chunk meat-like meat alternative tend to be close to those of livestock meat.

Hereinafter, details of the chunk meat-like meat alternative according to the disclosure will be described.

The expression "chunk meat-like meat alternative according to the disclosure" encompasses the chunk meat-like meat alternative according to the first embodiment of the disclosure, the chunk meat-like meat alternative according to the second embodiment of the disclosure, the chunk meat-like meat alternative according to the third embodiment of the disclosure, and the chunk meat-like meat alternative according to the fourth embodiment of the disclosure.

### (Fiber Bundle-Shaped Textured Protein)

The chunk meat-like meat alternative according to the disclosure contains a fiber bundle-shaped textured protein.

The fiber bundle-shaped textured protein is a protein having a certain fiber bundle-shaped texture.

The "fiber bundle shape" refers to a structure similar to a bundle of fibers extending one direction.

From the viewpoint of the shape and texture, the fiber bundle-shaped textured protein is preferably a fiber bundle-shaped textured protein which has a muscle-like texture.

The "muscle-like texture" refers to a texture which has a structure similar to a bundle of fibers and which can be split in one direction, that is, a direction along a longitudinal direction of the bundle of fibers.

Among them, the muscle-like texture is preferably a texture which has a structure similar to a bundle of fibers and can be split into fibers in one direction.

Lean of livestock meat is derived from muscle. The muscle is composed of a bundle of muscle fibers. Therefore, the lean of the livestock meat has a structure like a bundle of fibers. Since the vegetable protein binder according to the disclosure is applied to a fiber bundle-shaped textured protein having a muscle-like texture, a meat alternative having a texture closer to that of livestock meat can be obtained.

The fiber bundle-shaped textured protein is preferably composed of a vegetable protein.

The vegetable protein is a protein collected from a plant.

The vegetable protein is not particularly limited as long as the vegetable protein is a protein collected from a plant. Examples of the origin of the vegetable protein include: cereals such as wheat, barley, oats, rice, and corn; beans such as soybean, pea, red bean, chickpea, lentil, broad bean, mung bean, and lupin bean; seeds such as almond, peanut, cashew nut, pistachio, hazelnut, macadamia nut, linseed, sesame, rapeseed, cottonseed, safflower, and sunflower; potatoes such as potato, sweet potato, yam, Jerusalem artichoke, and cassava; vegetables such as asparagus, artichoke, cauliflower, broccoli, and green soybean; fruits such as banana, jack fruit, kiwi fruit, coconut, avocado, and olive; mushrooms such as mushroom, Eryngii mushroom, shiitake mushroom, shimeji mushroom, and maitake mushroom; and algae such as chlorella, spirulina, euglena, laver, kelp, wakame seaweed, hijiki, agar weed, and mozuku. Among them, the origin of the vegetable protein is preferably at least one selected from the group consisting of wheat, soybean, pea, and rice, and is more preferably at least one selected from the group consisting of soybean and wheat, from the viewpoint of obtaining a meat alternative having an appearance and texture similar to those of mass meat.

The vegetable protein may contain one kind of plant-derived protein, or may contain two or more kinds of plant-derived proteins.

Examples of the fiber bundle-shaped textured protein having a muscle-like texture include a sponge-like fiber bundle-shaped textured protein and a fibrous fiber bundle-shaped textured protein.

The "sponge-like" refers to an isotropic porous structure in appearance.

The "fibrous" refers to an anisotropic fiber structure in appearance.

The "isotropic porous structure" refers to a structure in which a shape of a hole in a cross section formed by cutting the chunk meat-like meat alternative at an arbitrary position is a substantially elliptical shape and is substantially the same regardless of a cutting direction.

The "anisotropic fiber structure" refers to a structure in which a cross section formed by cutting the chunk meat-like meat alternative at an arbitrary position is fibrous. **In** this case, the cross section formed by cutting the chunk meat-like meat alternative preferably has a hole shape, and the hole shape changes to different shapes such as a substantially elliptical shape or a substantially fibrous shape depending on the cutting direction.

Examples of a method of observing the cross section include: a method in which a chunk meat-like meat alternative is cut to cut out a slice therefrom and a cross section of the slice is observed with a microscope; and a method in which such a cross section is observed with X-ray computed tomography (CT).

The fiber axis directions of the fiber bundle-shaped textured proteins contained in the meat alternative of the disclosure are oriented in one direction in neighboring regions.

The fiber axis direction means an orientation of a longitudinal direction of fibers of the fiber bundle-shaped textured protein which form the muscle-like texture.

The aspect in which the fiber axis directions of the fiber bundle-shaped textured proteins are oriented in one direction in neighboring regions includes, for example, an embodiment in which a part of fiber bundle-shaped textured proteins has a fiber axis direction that differs from that of neighboring fiber bundle-shaped textured proteins, an embodiment in which the fiber axis directions of the fiber bundle-shaped textured proteins are oriented in a constant direction as a whole, and an embodiment in which the fiber axis directions of the fiber bundle-shaped textured proteins are oriented in one direction in neighboring regions while including a fluctuation as a whole, in addition to an embodiment in which the fiber axis directions of the fiber bundle-shaped textured proteins are oriented in one direction as a whole.

The sponge-like textured protein having an isotropic porous structure can be also processed to be a fiber bundle-shaped textured protein by a method of loosening a protein into a fiber shape or a method of cutting a protein into a fiber shape.

From the viewpoint of the appearance or the texture, the fiber bundle-shaped textured protein contained in the chunk meat-like meat alternative is more preferably a fibrous fiber bundle-shaped textured protein.

A content of the fiber bundle-shaped textured protein is preferably from 5% by mass to 95% by mass, more preferably from 7% by mass to 90% by mass, and still more preferably from 10% by mass to 85% by mass, with respect to an entirety of the chunk meat-like meat alternative.

### (Binder and Enzyme)

It is preferable that the chunk meat-like meat alternative according to the disclosure contains at least one selected from the group consisting of a binder and an enzyme that cures a protein.

The binder is not particularly limited as long as it is edible and can maintain the shape of the chunk meat-like meat alternative.

Examples of the binder include a protein, a polysaccharide, and a starch. The binders may be used singly, or in combination of two or more kinds thereof.

The protein used as the binder may be the same as or different from the protein contained in the chunk meat-like meat alternative.

Examples of the protein used as the binder include a vegetable protein and an animal protein.

Examples of the vegetable protein used as the binder include proteins derived from wheat, soybean, and rice.

Examples of the animal protein used as the binder include a milk protein and egg white.

Examples of the polysaccharide include a thermally irreversible gel-forming polysaccharide and a thermally reversible gel-forming polysaccharide.

The thermally irreversible gel-forming polysaccharide is a polysaccharide that forms a thermally irreversible gel.

A thermally irreversible gel is a gel that maintains its gelled state even when heated once the gel is formed. Note that, in the disclosure, the "gel" refers to a gel that contains at least water and a thermally irreversible gel-forming polysaccharide and exhibits a behavior as an elastic solid.

The thermally irreversible gel-forming polysaccharide is preferably at least one selected from the group consisting of a polysaccharide that gels by heating, a polysaccharide that gels by a reaction with a cation, and a polysaccharide that gels by pH adjustment.

Examples of the polysaccharide that gels by a reaction with a cation include a polysaccharide having at least one selected from the group consisting of a carboxy group, a carboxylic acid anion group (-COO⁻), a sulfo group, and a sulfonic acid anion group (-SO₃⁻).

Examples of the thermally irreversible gel-forming polysaccharide include curdlan, glucomannan, alginic acid, low methoxyl (LM) pectin, and low acyl (LA) gellan gum.

The cation that promotes gelation is preferably a metal ion having an ionic valence of 2 or higher.

Examples of the metal ion include divalent metal ions such as a calcium ion, a magnesium ion, an iron(II) ion, a copper(II) ion, a zinc ion, and a manganese ion, and trivalent metal ions such as an aluminum ion and an iron(III) ion.

From the viewpoint of obtaining a stable crosslinked structure, the metal ion is preferably at least one selected from a calcium ion, a magnesium ion, or a zinc ion, and more preferably a calcium ion.

From the viewpoint of improving moldability and workability, the thermally irreversible gel-forming polysaccharide is preferably at least one selected from the group consisting of alginic acid and pectin.

A viscosity of an aqueous solution containing 1% by mass of the thermally irreversible gel-forming polysaccharide (an aqueous solution containing 1% by mass of the thermally irreversible gel-forming polysaccharide with respect to an entirety of the aqueous solution) is preferably from 10 mPa·S to 3,000 mPa·S, and more preferably from 20 mPa·S to 1,000 mPa·S.

The viscosity of the aqueous solution containing 1% by mass of the thermally irreversible gel-forming polysaccharide is a value measured by a tuning fork vibration type viscometer under a temperature condition of 20°C.

As the tuning fork vibration type viscometer, for example, SV-10 (manufactured by A&D Company, Limited) can be used.

The thermally reversible gel-forming polysaccharide is a polysaccharide that forms a thermally reversible gel.

The thermally reversible gel is a gel that maintains its gelled state at room temperature (25°C) and is melted and liquefied (solated) when heat is applied. Note that a heating temperature when liquefied depends on the kind of the polysaccharide.

Examples of the thermally reversible gel-forming polysaccharide include agar, carrageenan, furcellan, native gellan gum, locust bean gum, xanthan gum, guar gum, psyllium seed gum, tara gum, and tamarind seed gum.

From the viewpoint of the moldability and texture, the thermally reversible gel-forming polysaccharide is preferably carrageenan.

As the enzyme that cures a protein, transglutaminase is preferably used.

As the transglutaminase, a commercially available product can be used, and examples thereof include ACTIVA (registered trademark) series manufactured by AJINOMOTO CO., INC.

A total content of the binder and the enzyme that cures a protein is preferably from 5% by mass to 30% by mass, and more preferably from 10% by mass to 20% by mass, with respect to the mass of an entirety of the chunk meat-like meat alternative.

### (Oil and/or fat)

It is preferable that the chunk meat-like meat alternative according to the disclosure contains oil and/or fat from the viewpoint of the texture.

Examples of the oil and/or fat include vegetable oil and/or fat and animal oil and/or fat.

Examples of the vegetable oil and/or fat include rapeseed oil, soybean oil, palm oil, olive oil, rice oil, corn oil, and coconut oil. Note that the vegetable oil and/or fat refers to oil and/or fat obtained from a plant.

Examples of the animal oil and/or fat include beef tallow, lard, whale oil, and fish oil. Note that the animal oil and/or fat refers to oil and/or fat obtained from an animal.

A melting temperature of the oil and/or fat is not particularly limited, and may be, for example, 300°C or lower.

The melting temperature of the oil and/or fat is a value measured by a thermal analysis measurement apparatus.

As the thermal analysis measurement apparatus, for example, SSC5000DSC200 manufactured by Seiko EG&G Co., Ltd. can be used.

The melting temperature of the oil and/or fat is measured by adding 3 mg of a sample to an apparatus and performing a measurement at a heating rate of 3 °C/min.

A content of the oil and/or fat is preferably from 0% by mass to 50% by mass, more preferably from 1% by mass to 40% by mass, and still more preferably from 3% by mass to 30% by mass, with respect to an entirety of the chunk meat-like meat alternative.

### (Fat Mass Composition)

The chunk meat-like meat alternative according to the disclosure may contain a fat mass composition, in which the fat mass composition contains: a granular material containing oil and/or fat; and a hydrophilic gel.

As the oil and/or fat contained in the fat mass composition, the same oil and/or fat as those described above can be used.

An average particle diameter of the granular material is preferably from 50 µm to 500 µm.

The average particle diameter of the granular material is a value obtained by measuring five granular materials by observing the fat mass composition with a transmission optical microscope and calculating an average value thereof.

It is preferable that the fat mass composition contains a hydrophilic gel, and the hydrophilic gel is gelled with an edible ionically crosslinkable polymer crosslinked with a cation.

The term "edible" means a property that does not adversely affect a health condition when orally ingested by a human.

The term "ionically crosslinkable polymer" means a polymer that can be crosslinked by a reaction with an ion.

Examples of the edible ionically crosslinkable polymer include alginic acid, carrageenan, LM pectin, and low acyl (LA) gellan gum.

From the viewpoint of improving the heat resistance of the fat mass composition, the edible ionically crosslinkable polymer is preferably at least one selected from the group consisting of alginic acid, LM pectin, and LA gellan gum.

The cation is preferably a metal ion having an ionic valence of 2 or higher.

Examples of the metal ion include divalent metal ions such as a calcium ion, a magnesium ion, an iron(II) ion, a copper(II) ion, a zinc ion, and a manganese ion, and trivalent metal ions such as an aluminum ion and an iron(III) ion.

From the viewpoint of obtaining a stable crosslinked structure, the metal ion is preferably at least one selected from a calcium ion, a magnesium ion, or a zinc ion, and more preferably a calcium ion.

A content of the fat mass composition is preferably from 0% by mass to 50% by mass, more preferably from 1% by mass to 40% by mass, and still more preferably from 3% by mass to 30% by mass, with respect to an entirety of the chunk meat-like meat alternative.

### (Other Additives)

The chunk meat-like meat alternative according to the disclosure may contain, for example, additives such as water, a seasoning, an acidulant, a bittering agent, a spice, a sweetener, an antioxidant, a coloring material, a color fixer, a flavor, a stabilizer, and a preservative.

In a case in which these additives are used, a content of the additives with respect to the chunk meat-like meat alternative is preferably from 0% by mass to 20% by mass.

### (Toughness)

The chunk meat-like meat alternative according to the disclosure has a toughness in a multi-byte test of from 1,000 gw·cm/cm² to 50,000 gw·cm/cm².

From the viewpoint of the texture, the toughness in the multi-byte test is preferably from 1,500 gw·cm/cm² to 40,000 gw·cm/cm², and more preferably from 2,000 gw·cm/cm² to 30,000 gw·cm/cm².

The toughness in the multi-byte test is a value measured by a viscoelasticity tester. As the viscoelasticity tester, for example, TENSIPRESSER MyBpy2system (product name, manufactured by Takemoto Denki Co., Ltd.) can be used.

Hereinafter, a method of measuring a toughness in a multi-byte test will be specifically described.

In the method of measuring a toughness in a multi-byte test, a multi-byte test is used. A sample is cut into a piece having a size of 30 mm square and a thickness of 5 mm. The piece is set on a stage of the viscoelasticity tester and subject to a measurement for three times under multi-byte test measurement conditions, and an average value thereof is taken as a measured value.

### (Degree of Orientation of Fiber Direction in Cross Section of Chunk Meat-Like Meat Alternative)

The chunk meat-like meat alternatives according to the first embodiment and the second embodiment of the disclosure have a degree of orientation of the fiber direction in the cross section parallel to the fiber axis direction of the fiber bundle-shaped textured protein of 1.1 or more.

From the viewpoint of the appearance, cross section and the texture, the degree of orientation of the fiber direction of the fiber bundle-shaped textured protein in the cross section parallel to the fiber axis direction of the fiber bundle-shaped textured protein is preferably 1.10 or more, more preferably 1.15 or more, and still more preferably 1.20 or more.

The degree of orientation of the fiber direction of the fiber bundle-shaped textured protein in the cross section parallel to the fiber axis direction of the fiber bundle-shaped textured protein may be 2.0 or less.

The degree of orientation of the fiber direction of the fiber bundle-shaped textured protein in the cross section parallel to the fiber axis direction of the fiber bundle-shaped textured protein is preferably from 1.10 to 2.0, more preferably from 1.15 to 2.0, and still more preferably from 1.20 to 2.0.

A degree of orientation, an integrated degree of orientation, and a standard deviation of an orientation angle of the fiber direction of the fiber bundle-shaped textured protein in a cross section of the chunk meat-like meat alternative are calculated by the methods described in the following Literature 1 based on an image obtained by imagining the cross section of the chunk meat-like meat alternative.

Literature 1: Enomae, T., Han, Y-H. and Isogai, A., "Nondestructive determination of fiber orientation distribution of paper surface by image analysis", Nordic Pulp and Paper Research Journal 21(2): 253-259(2006).http://www.enomae.com/publish/pdf/2006NPPRJ_FibreOrientation.pdf

### (Method of Measuring Degree of Orientation of Fiber Direction in Cross Section of Chunk Meat-Like Meat Alternative)

Specifically, the degree of orientation of the fiber direction in the cross section is calculated by the following procedure of "-Cross Section Imaging-" and "-Calculation of Degree of Orientation-".

### -Cross Section Imaging-

First, a cross section is exposed by cutting the chunk meat-like meat alternative, and the cross section of the chunk meat-like meat alternative is imaged under the following conditions.

When the "degree of orientation of the fiber direction of the fiber bundle-shaped textured protein in the cross section parallel to the fiber axis direction of the fiber bundle-shaped textured protein" is calculated, the cross section exposed by cutting is imaged as follows.

A cross section is exposed by cutting the chunk meat-like meat alternative along a direction parallel to the fiber axis direction of the fiber bundle-shaped textured protein.
· Imaging Conditions
   Digital camera: product name: GFX100, manufactured by FUJIFILM Corporation,
   Lens: GF 63 mm F 2.8 R WR
   Imaging mode: monochrome
   Diaphragm value: F4
   Shutter speed: 1/30
   ISO sensitivity: 100
   Light quantity at meat alternative surface: EV = 9 1,280 lux
   Background at time of imaging: white

### -Calculation of Degree of Orientation-

From the cross-sectional image obtained by imagining, a portion corresponding to a region having a shape of a square a length of each side of which is 15 mm is cut out as a unit area in the cross section of the chunk meat-like meat alternative, and the obtained portion is converted to 512 × 512 pixels. A degree of orientation in the unit area is calculated for each of five points according to Literature 1, and an average of the calculated values of the five points is taken as a specific degree of orientation.

Any means may be employed for calculating the degree of orientation as long as the degree of orientation can be calculated. For example, a non-destructive paper surface fiber orientation analysis program FiberOri8single03.exe, which is free software, can be used. The free software described in the following site may be used as the non-destructive paper surface fiber orientation analysis program.
http://www.enomae.com/FiberOri/index.htm

In a case in which a size of the chunk meat-like meat alternative is less than 25 mm, the same chunk meat-like meat alternatives are stacked to a size of 25 mm or more and the resultant is subject to the imaging and calculation of a specific degree of orientation.

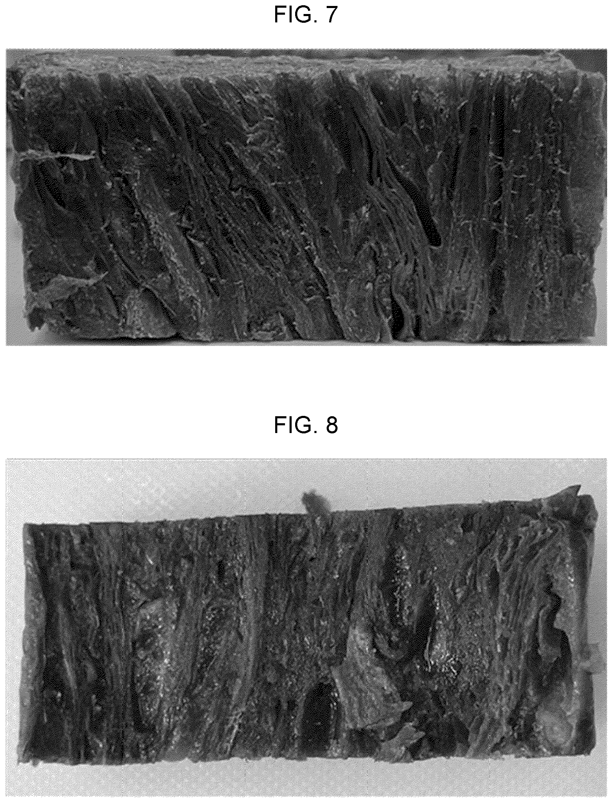

As an example of the degree of orientation, a schematic front view showing an example of the cross section of the chunk meat-like meat alternative according to the disclosure is illustrated in Fig. 7. Fig 7 illustrates an example in which a degree of orientation is 1.42.

### (Integrated Degree of Orientation of Chunk Meat-Like Meat Alternative)

The chunk meat-like meat alternative according to the third embodiment of the disclosure has an integrated degree of orientation of the fiber direction of the fiber bundle-shaped textured protein in the cross section parallel to the fiber axis direction of the fiber bundle-shaped textured protein of 1.1 or more.

From the viewpoint of the appearance, cross section and the texture, the integrated degree of orientation of the fiber direction of the fiber bundle-shaped textured protein in the cross section parallel to the fiber axis direction of the fiber bundle-shaped textured protein is preferably 1.15 or more, and more preferably 1.20 or more.

The integrated degree of orientation of the fiber direction of the fiber bundle-shaped textured protein in the cross section parallel to the fiber axis direction of the fiber bundle-shaped textured protein may be 2.00 or less.

The integrated degree of orientation of the fiber direction of the fiber bundle-shaped textured protein in the cross section parallel to the fiber axis direction of the fiber bundle-shaped textured protein is preferably from 1.15 to 2.00, and more preferably from 1.20 to 2.00.

The chunk meat-like meat alternatives according to the second embodiment, the third embodiment, and the fourth embodiment of the disclosure have an integrated degree of orientation of the fiber direction of the fiber bundle-shaped textured protein in the cross section perpendicular to the fiber axis direction of the fiber bundle-shaped textured protein of less than 1.4.

From the viewpoint of the appearance, cross section and the texture, the integrated degree of orientation of the fiber direction of the fiber bundle-shaped textured protein in the cross section perpendicular to the fiber axis direction of the fiber bundle-shaped textured protein is preferably less than 1.35, and more preferably less than 1.30.

The integrated degree of orientation of the fiber direction of the fiber bundle-shaped textured protein in the cross section perpendicular to the fiber axis direction of the fiber bundle-shaped textured protein may be 1.0 or more.

The integrated degree of orientation of the fiber direction of the fiber bundle-shaped textured protein in the cross section perpendicular to the fiber axis direction of the fiber bundle-shaped textured protein is preferably from 1.0 to less than 1.4, more preferably from 1.0 to less than 1.35, and still more preferably from 1.0 to less than 1.30.

### -Measurement Procedure of Integrated Degree of Orientation of Chunk Meat-Like Meat Alternative-

The measurement and calculation of the integrated degree of orientation are performed by the method described in Non Patent Literature 1 based on an image obtained by imagining cross sections in a direction parallel to the fiber axis direction and in a direction perpendicular to the fiber axis direction of the fiber bundle-shaped textured protein of the chunk meat-like meat alternative.

Specifically, the integrated degree of orientation is calculated by the following procedure of "-Cross Section Imagining-" and "-Calculation of Integrated Degree of Orientation-".

### -Cross Section Observation-

First, a cross section is exposed by cutting the chunk meat-like meat alternative, and the cross section of the chunk meat-like meat alternative is imaged under the following conditions.

In a case in which the "integrated degree of orientation of the fiber direction of the fiber bundle-shaped textured protein in the cross section parallel to the fiber axis direction of the fiber bundle-shaped textured protein" is calculated, a cross section exposed by cutting the chunk meat-like meat alternative along the direction parallel to the fiber axis direction of the fiber bundle-shaped textured protein is imaged.

When the "degree of orientation of the fiber direction of the fiber bundle-shaped textured protein in the cross section perpendicular to the fiber axis direction of the fiber bundle-shaped textured protein" is calculated, a cross section exposed by cutting the chunk meat-like meat alternative along the direction perpendicular to the fiber axis direction of the fiber bundle-shaped textured protein is imaged.

Note that the imaging conditions are the same as "· Imaging Conditions" described in "(Method of Measuring Degree of Orientation in Fiber Direction in Cross Section of Chunk Meat-Like Meat Alternative)".

### -Calculation of Integrated Degree of Orientation-

From the cross-sectional image obtained by imagining, a portion corresponding to a region having a square shape having one side of 25 mm is cut out as a unit area in the cross section of the chunk meat-like meat alternative, and the obtained portion is converted to 512 × 512 pixels. An approximate ellipse is obtained by performing Fourier transform and polar coordinate transform on an image according to Literature 1 described above in a unit area, integrating 25 points of data converted into an amplitude spectrum, and approximating the result. A value obtained by calculating the degree of orientation from the approximate ellipse is taken as the integrated degree of orientation.

For the calculation of the integrated degree of orientation, the same one as the "non-destructive paper surface fiber orientation analysis program" described in "(Method of Measuring Degree of Orientation in Fiber Direction in Cross Section of Chunk Meat-Like Meat Alternative)" can be used.

Note that, in a case in which a size of the chunk meat-like meat alternative is less than 25 mm, the same chunk meat-like meat alternatives are stacked to a size of 25 mm or more and the resultant is subject to the imaging and calculation of an integrated degree of orientation.

### (Standard Deviation of Orientation Angle of Chunk Meat-Like Meat Alternative)

The chunk meat-like meat alternative according to the fourth embodiment of the disclosure has a standard deviation of the orientation angle of the fiber direction of the fiber bundle-shaped textured protein in the cross section parallel to the fiber axis direction of the fiber bundle-shaped textured protein of 20 or less.

From the viewpoint of the appearance, cross section and the texture, the standard deviation of the orientation angle of the fiber direction of the fiber bundle-shaped textured protein in the cross section parallel to the fiber axis direction of the fiber bundle-shaped textured protein is preferably 15 or less, and more preferably 10 or less.

The standard deviation of the orientation angle of the fiber direction of the fiber bundle-shaped textured protein in the cross section parallel to the fiber axis direction of the fiber bundle-shaped textured protein may be 5 or more.

The standard deviation of the orientation angle of the fiber direction of the fiber bundle-shaped textured protein in the cross section parallel to the fiber axis direction of the fiber bundle-shaped textured protein is preferably from 5 to 15, and more preferably from 5 to 10.

### -Measurement Procedure of Standard Deviation of Orientation Angle of Chunk Meat-Like Meat Alternative-

The measurement and calculation of the standard deviation of the orientation angle are performed by the method described in Literature 1 based on an image obtained by imagining a cross section in a direction parallel to the fiber axis direction of the fiber bundle-shaped textured protein of the chunk meat-like meat alternative.

Specifically, the standard deviation of the orientation angle is calculated by the following procedure of "-Cross Section Imagining-" and "-Calculation of Standard Deviation of Orientation Angle-".

### -Cross Section Observation-

The same procedure as "-Cross Section Observation-" described in "-Measurement Procedure of Integrated Degree of Orientation of Chunk Meat-Like Meat Alternative-" is repeated 25 times while changing the imagining location to obtain a total of 25 cross-sectional images of the chunk meat-like meat alternative.

### -Calculation of Standard Deviation of Orientation Angle-

From the 25 cross-sectional images obtained by imagining, one portion corresponding to a region having a square shape having one side of 25 mm is cut out as a unit area in the cross section of the chunk meat-like meat alternative, and the obtained portion converted to 512 × 512 pixels is obtained. Note that one unit area is cut out per cross-sectional image to obtain a total of 25 unit areas.

An approximate ellipse is obtained from the data converted into an amplitude spectrum by performing Fourier transform and polar coordinate transform on an image according to Literature 1 described above in a unit area. One approximate ellipse is obtained per unit area, and a total of 25 approximate ellipses are obtained.

The degree of orientation of each approximate ellipse is calculated, and a standard deviation of the value is taken as the standard deviation of an orientation angle.

For the calculation of the standard deviation of the orientation angle, the same one as the "non-destructive paper surface fiber orientation analysis program" described in "(Method of Measuring Degree of Orientation in Fiber Direction in Cross Section of Chunk Meat-Like Meat Alternative)" can be used.

Note that, in a case in which a size of the chunk meat-like meat alternative is less than 25 mm, the same chunk meat-like meat alternatives are stacked to a size of 25 mm or more and the resultant is subject to the imaging and calculation of a standard deviation of an orientation angle.

In a case in which the orientation angle is around 0° (or 180°), the standard deviation increases. In such a case, in order to calculate the standard deviation, the directions of imaging and/or image are adjusted so that a direction of stretching, a direction of visually recognized orientation, or a direction of temporary measured orientation of the chunk meat-like meat alternative becomes a vertical direction, that is, the orientation angle is in a range of from 45° to 135°.

### <Method of Producing Chunk Meat-Like Meat Alternative>

A method of producing a chunk meat-like meat alternative according to the disclosure includes: a first step of mixing a fiber bundle-shaped textured protein and a binder to obtain a mixture; and a second step of stretching the mixture to obtain a stretched mixture in which a degree of orientation of a fiber direction of the fiber bundle-shaped textured protein in a cross section along a direction of the stretching is 1.1 or more.

An embodiment of the method of producing a chunk meat-like meat alternative according to the disclosure will be described below, but the disclosure is not limited thereto.

JP-A No. H7-8177 discloses a method of stacking sheet-like protein materials and subjecting its resultant to compression-molding and a method of stacking a prismatic protein material and a sheet-like protein material and subjecting its resultant to compression-molding. However, in a case in which sheet-like materials are stacked, boundary lines thereof become linear, and the sheet-like materials are unnatural as meat, which is not preferable from the viewpoint of the appearance. In a case in which a binder is mixed only with a prismatic protein material without using a sheet-like protein material, the fiber direction becomes random, which is also not preferable from the viewpoint of the appearance. From the viewpoint of the workability, it is not preferable to rearrange random prismatic protein materials one by one.

### (Preparation Step)

The method of producing a chunk meat-like meat alternative according to the disclosure may include a step of preparing a fiber bundle-shaped textured protein before performing the first step.

As the fiber bundle-shaped textured protein, a fiber bundle-shaped textured protein prepared therefor may be used, or a commercially available fiber bundle-shaped textured protein may be used.

In a case in which the fiber bundle-shaped textured protein is prepared, it is preferable to prepare the fiber bundle-shaped textured protein by extruding a raw material containing a vegetable protein from an extruder.

Note that extrusion conditions are preferably as follows.

### · Raw Material Containing Vegetable Protein

As the raw material containing a vegetable protein, at least a vegetable protein is contained, and it is preferable to further contain water from the viewpoint of improving extraction efficiency.

A content of the water is preferably from 2 parts by mass to 30 parts by mass with respect to 10 parts by mass of the protein.

### · Extrusion Conditions

The extruder is not particularly limited, and a single screw extruder, a non-intermeshing counter-rotating twin screw extruder, an intermeshing counter-rotating twin screw extruder, and intermeshing co-counter rotating twin screw extruder, which are known in the art, can be used.

As for barrel temperatures of the extruder, a temperature of a barrel front half portion (a portion from a raw material supply unit to the center of the barrel) is preferably from 60°C to 100°C, a temperature of the center of the barrel (an axial length center of the barrel) is preferably from 90°C to 170°C, and a temperature of a barrel rear half portion (a portion from the center of the barrel to the tip of the barrel) is preferably from 140°C to 180°C.

It is preferable that the extruder has a die attached to the tip of the barrel.

The die is preferably a die from which a sheet-like extrudate is obtained.

A gap (lip clearance) of a discharge port of the die is preferably from 1 mm to 10 mm. The shape of the discharge port may be a flat plate shape or a cylindrical shape.

A length of the die is preferably 30 mm or more.

The die may be a cooling die. The cooling die refers to, for example, a die cooled by circulation of a cooling liquid (water, glycol, or the like). Cooling may be performed by circulating cooling water or may be performed by air cooling.

Swelling of the extruded raw material tends to be easily suppressed by using the cooling die. Therefore, the textured protein extruded using the cooling die tends to be fibrous.

In a case in which the cooling die is used, a temperature of the discharge port of the cooling die is preferably from 90°C to 120°C.

In a case in which a commercially available textured protein is used, as the fiber bundle-shaped textured protein, WHAT THE CLUCK manufactured by The Vegetarian Butcher Japan Inc., APEX 1000 manufactured by Fuji Oil Co., Ltd., and the like can be used.

### (First Step)

The first step is a step of mixing a fiber bundle-shaped textured protein and a binder to obtain a mixture.

The fiber bundle-shaped textured protein has the same meaning as the fiber bundle-shaped textured protein contained in the chunk meat-like meat alternative, and a preferred aspect thereof is also the same as the fiber bundle-shaped textured protein contained in the chunk meat-like meat alternative.

As the binder, the same binder as the binder contained in the chunk meat-like meat alternative can be used.

From the viewpoint of the moldability, heat resistance, and texture, it is preferable that the binder contains a thermally reversible gel-forming polysaccharide and a thermally irreversible gel-forming polysaccharide.

A content of the thermally reversible gel-forming polysaccharide is preferably from 10% by mass to 90% by mass, more preferably from 20% by mass to 80% by mass, and still more preferably from 30% by mass to 70% by mass, with respect to an entirety of the binder.

A content of the thermally irreversible gel-forming polysaccharide is preferably from 10% by mass to 90% by mass, more preferably from 20% by mass to 80% by mass, and still more preferably from 30% by mass to 70% by mass, with respect to an entirety of the binder.

The amount of the binder added in the first step is preferably from 1% by mass to 30% by mass, more preferably from 3% by mass to 25% by mass, and still more preferably from 5% by mass to 20% by mass, with respect to the mass of the fiber bundle-shaped textured protein swollen by moisture.

A method of mixing the fiber bundle-shaped textured protein and the binder is not particularly limited, and examples thereof include a method of mixing by hand and a method using a known mixing device.

Examples of the mixing device include a mixer, and attachment of the mixer preferably has a structure that scrapes up deposits on a wall surface.

It is preferable to adjust the fiber bundle-shaped textured protein to an appropriate size before mixing the fiber bundle-shaped textured protein and the binder.

Examples of a method of adjusting a size of the fiber bundle-shaped textured protein include a method of tearing the fiber bundle-shaped textured protein, a method of cutting the fiber bundle-shaped textured protein with a knife, and a method using both methods.

The size of the fiber bundle-shaped textured protein may be adjusted by crushing the protein in the vicinity of the discharge port of the extruder in the above-described "(Preparation Step)", or may be adjusted by crushing the protein using a meat mallet or the like after collection from the extruder.

It is preferable that the fiber bundle-shaped textured protein has a horizontal width of from 2 mm to 35 mm and a vertical width of from 35 mm to 500 mm before being mixed with the binder.

A thickness of the fiber bundle-shaped textured protein is not particularly limited, and is preferably appropriately adjusted according to a thickness of the fiber bundle-shaped textured protein produced by an extruder or the like. The horizontal width of the fiber bundle-shaped textured protein is preferably, for example, from 0.1 times to 2 times the horizontal width of the chunk meat-like meat alternative to be produced.

In a case in which the chunk meat-like meat alternative to be produced contains oil and/or fat, a fat mass composition, other additives, and the like, it is preferable to mix these materials together with the fiber bundle-shaped textured protein and the binder in the first step.

### (Second Step)

The second step is a step of stretching the mixture obtained in the first step to obtain a stretched mixture having a degree of orientation of a fiber direction of the fiber bundle-shaped textured protein in a cross section along a direction of the stretching of 1.1 or more.

The method of stretching the mixture obtained in the first step (hereinafter, also referred to as "first step mixture") is not particularly limited as long as a stretched mixture obtained thereby has a degree of orientation of the fiber direction of the fiber bundle-shaped textured protein in the cross section in the direction of the stretching (hereinafter, also referred to as "specific degree of orientation") of 1.1 or more.

### -Specific Degree of Orientation-

From the viewpoint of the appearance, cross section and the texture, the specific degree of orientation is preferably 1.10 or more, more preferably 1.15 or more, and still more preferably 1.20 or more.

The specific degree of orientation may be 2.0 or less. The specific degree of orientation is preferably from 1.10 to 2.0, more preferably from 1.15 to 2.0, and still more preferably from 1.20 to 2.0.

The specific degree of orientation is a value calculated by the method described in Literature 1.

Specifically, the specific degree of orientation is calculated by the method described in Literature 1 based on an image obtained by imaging a cross section of the stretched mixture, in which the cross section is in the direction of the stretching.

### -Method of Measuring Specific Degree of Orientation-

Specifically, the specific degree of orientation is calculated by the following procedure of (Cross Section Imaging) and (Calculation of Specific Degree of Orientation).

### (Cross Section Imaging)

The stretched mixture after the second step is heated and cured. Thereafter, a cross section is exposed by cutting the stretched mixture along the direction of the stretching, and the cross section of the stretched mixture is imaged under the following conditions.
· Imaging Conditions
   Digital camera: product name: GFX100, manufactured by FUJIFILM Corporation
   Lens: GF 63 mm F 2.8 R WR
   Imaging mode: monochrome
   Diaphragm value: F4
   Shutter speed: 1/30
   ISO sensitivity: 100
   Light quantity of meat alternative surface: EV = 9 1,280 lux
   Background at time of imaging: white

### (Calculation of Specific Degree of Orientation)

From the cross-sectional image obtained by imagining, a portion corresponding to a region having a shape of a square a length of each side of which is 15 mm is cut out as a unit area in the cross section of the stretched mixture, and the obtained portion is converted to 512 × 512 pixels. A degree of orientation in the unit area is calculated for each of five points according to Literature 1, and an average of the calculated values of the five points is taken as a specific degree of orientation.

The degree of orientation may be calculated in any manner as long as the degree of orientation can be calculated, and for example, a non-destructive paper surface fiber orientation analysis program FiberOri8single03.exe, which is free software, can be used. The free software described in the following site may be used as the non-destructive paper surface fiber orientation analysis program.
http://www.enomae.com/FiberOri/index.htm

In a case in which a size of the stretched mixture is less than 15 mm, the same stretched mixtures are stacked to a size of 15 mm or more and the resultant is subject to the imaging and calculation of a specific degree of orientation.

### -Integrated Degree of Orientation of Stretched Mixture-

From the viewpoint of the appearance, cross section and the texture, an integrated degree of orientation of the fiber direction of the fiber bundle-shaped textured protein in the cross section along the direction of the stretching of the stretched mixture (hereinafter, also referred to as "specific integrated degree of orientation") is preferably 1.10 or more, more preferably 1.15 or more, and still more preferably 1.20 or more.

The specific integrated degree of orientation may be 2.00 or less. The specific integrated degree of orientation is preferably from 1.10 to 2.00, more preferably from 1.15 to 2.00, and still more preferably from 1.20 to 2.00.

### -Method of Measuring Specific Integrated Degree of Orientation-

The measured specific integrated degree of orientation is calculated by the method described in Non Patent Literature 1 described above based on an image obtained by imaging a cross section of the stretched mixture, in which the cross section is in the direction of the stretching.

Specifically, the specific integrated degree of orientation is calculated by the following procedure of "· Cross Section Imagining" and "· Calculation of Specific Integrated Degree of Orientation".

### · Cross Section Imaging

The cross section of the stretched mixture is imaged by the same procedure as "· Cross Section Imagining" described in "-Method of Measuring Specific Degree of Orientation-".

### · Calculation of Specific Integrated Degree of Orientation

The integrated degree of orientation is calculated by the same procedure as "-Calculation of Integrated Degree of Orientation-" of "-Measurement Procedure of Integrated Degree of Orientation of Chunk Meat-Like Meat Alternative-" described in the description of the chunk meat-like meat alternative according to the third embodiment of the disclosure except that the cross-sectional image of the stretched mixture imaged in the above-described procedure is used, and a value thereof is taken as a specific integrated degree of orientation.

### x-Standard Deviation of Orientation Angle of Stretched Mixture-

From the viewpoint of the appearance, cross section and the texture, a standard deviation of an orientation angle of the fiber direction of the fiber bundle-shaped textured protein in the cross section along the direction of the stretching of the stretched mixture (hereinafter, also referred to as "specific standard deviation of orientation angle") is preferably 20 or less, more preferably 15 or less, and still more preferably 10 or less.

The specific standard deviation of orientation angle may be 5 or more. The specific standard deviation of orientation angle is preferably from 5 to 20, more preferably from 5 to 15, and still more preferably from 5 to 10.

### -Method of Measuring Specific standard deviation of orientation angle-

The measured specific standard deviation of orientation angle is calculated by the method described in Non Patent Literature 1 described above based on an image obtained by imaging a cross section of the stretched mixture, in which the cross section is in the direction of the stretching.

Specifically, the specific standard deviation of orientation angle is calculated by the following procedure of "· Cross Section Imagining" and "· Calculation of Specific standard deviation of orientation angle".

### · Cross Section Imaging

The same procedure as "· Cross Section Imaging" described in "-Integrated Degree of Orientation of Stretched Mixture-" is repeated 25 times while changing the imagining location to obtain a total of 25 cross-sectional images of the stretched mixture.

### · Calculation of Specific standard deviation of orientation angle

The standard deviation of the orientation angle is calculated by the same procedure as "-Calculation of Standard Deviation of Orientation Angle-" of "-Measurement Procedure of Standard Deviation of Orientation Angle of Chunk Meat-Like Meat Alternative-" described in the description of the chunk meat-like meat alternative according to the fourth embodiment of the disclosure except that the cross-sectional image of the stretched mixture imaged in the above-described procedure is used, and a value thereof is taken as a specific standard deviation of orientation angle.

From the viewpoint of the degree of orientation and the orientation angle, the method of stretching the first step mixture is preferably any one of:
(i) a method of stretching the mixture in a direction perpendicular to a plane including a rotation axis of a roller set by pressing the mixture by the rollers by passing the mixture through a region surrounded by the roller set in the direction perpendicular to the plane including the rotation axis of the roller set;
(ii) a method of stretching the mixture in a direction parallel to a rotation axis of a roller set by pressing the mixture by the rollers by putting the mixture between the roller set having parallel rotation axes and rotating in the same direction with reducing a distance between the rollers while rotating the mixture;
(iii) a method of stretching the first step mixture by gripping and pulling a surface of the first step mixture;
(iv) a method of stretching the first step mixture by pressing the first step mixture with a plate; and
(v) a method of stretching the first step mixture by pressing the mixture by passing the mixture through a region surrounded by one roller and a guide disposed along a part of an outer circumference of the roller and in which a distance between the roller and the guide is reduced along a direction in which the roller rotates while rotating the first step mixture.

A stretch ratio of the mixture is preferably 2 times or more, more preferably 4 times or more, and still more preferably 6 times or more.

The stretch ratio is a value obtained by dividing the length of the stretched mixture in the direction of the stretching by the length of the first step mixture in the direction of the stretching.

Note that the direction of the stretching refers to a direction in which the first step mixture is stretched in the second step.

### -(i)-

Details of the method of stretching the mixture in a direction perpendicular to a plane including a rotation axis of a set of rollers (hereinafter, which may be also referred to as "roller set") by pressing the mixture by the rollers by passing the mixture through a region surrounded by the set of rollers in the direction perpendicular to the plane including the rotation axis of the set of rollers will be described.

The term "perpendicular" encompasses a range that can be considered to be substantially a right angle (specifically, a range of 90° ± 10°).

Examples of the method of passing the mixture through a region surrounded by a set of rollers in the direction perpendicular to the plane including the rotation axis of the set of rollers include a method of passing the first step mixture through the region surrounded by the set of rollers by moving either one of the roller set or the first step mixture.

From the viewpoint of simplifying a production continuity process, it is preferable to move the first step mixture.

The method of moving the first step mixture is not particularly limited, and the first step mixture may be moved by wrapping the first step mixture with a film and pulling the film as a carrier.

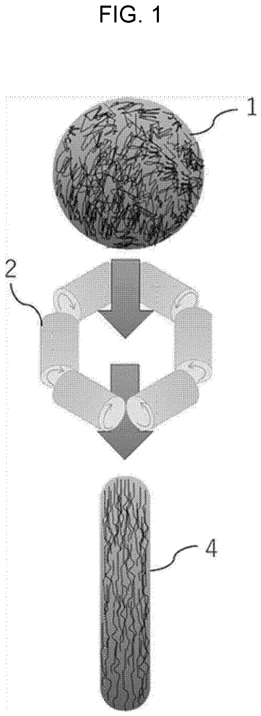

An example of an arrangement mode of the roller set is as illustrated in Fig. 1.

Fig. 1 is a view showing a series of flows in which a first step mixture 1 is passed through a region surrounded by a set of rollers (roller set) 2 so that the first step mixture 1 is stretched to obtain a stretched mixture 4.

The first step mixture 1 is passed through the region surrounded by the roller set 2 along a direction perpendicular to a plane including a rotation axis of the rollers included in the roller set 2 (that is, the direction of the thick arrow in Fig. 1).

The first step mixture 1 is stretched in the direction perpendicular to the rotation axis of the roller by pressing the first step mixture 1 by the roller in this manner.

Hereinafter, the rollers included in the roller set 2 will be described.

A size of the roller is not particularly limited, and is appropriately adjusted according to the size of the chunk meat-like meat alternative to be produced.

A length of the roller in an axial direction is preferably, for example, from 10 mm to 200 mm.

A diameter of the roller (a diameter of a cross section of the roller in a plane orthogonal to the axial direction of the roller) is preferably, for example, from 10 mm to 100 mm.

The rollers included in a roller set may have the same size or different sizes.

In the roller set, two rollers may be arranged so that the rotation axes of the rollers are parallel, or three or more rollers may be arranged so that the rotation axes of the rollers form sides of a polygon.

In the case of two rollers, a distance between the rollers (a distance obtained by subtracting radii of the two rollers from the distance between shafts of the rollers) is, for example, preferably from 5 mm to 200 mm, more preferably from 10 mm to 150 mm, and still more preferably from 20 mm to 100 mm.

In the case of three or more rollers, an area of the region surrounded by the rollers (that is, the region surrounded by the rollers on the surface including the rotation axes of the rollers) is, for example, preferably from 25 mm² and 90,000 mm², more preferably from 100 mm² and 62,500 mm², and still more preferably from 400 mm² and 40,000 mm².

The roller may rotate itself in a circumferential direction of the roller, or the roller may rotate in the circumferential direction by a stress generated by passing the first step mixture between the rollers.

As for the rotation direction of the roller, it is preferable that a portion of the roller that comes into contact with the first step mixture rotates in a direction along a moving direction of the first step mixture.

In a case in which the roller rotates itself in the circumferential direction, the number of rotations of the roller is not particularly limited, and is, for example, from 10 rpm to 100 rpm. Note that rpm is an abbreviation for revolutions per minute.

From the viewpoint of production continuity and the viewpoint of the degree of orientation, the second step is preferably a step of stretching the first step mixture by passing the first step mixture through plural roller sets arranged in one direction.

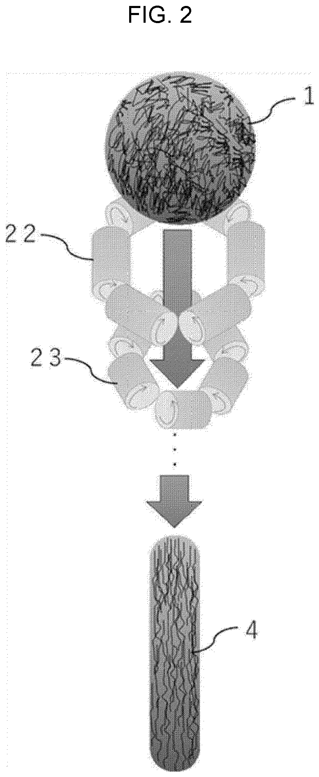

An example of a multi-stage arrangement mode of the set of plural rollers is as illustrated in Fig. 2.

Fig. 2 is a view showing a series of flows in which a first step mixture 1 is stretched by passing the first step mixture 1 between a first roller set 22 and a second roller set 23 to obtain a stretched mixture 4.

In Fig. 2, the first roller set 22 and the second roller set 23 are arranged along a direction in which the first step mixture 1 is moved.

It is preferable that the first roller set 22 and the second roller set 23 are arranged to have a crossing angle with each other in a direction in which the first step mixture 1 is moved is an axis and the rollers rotate about the axis.

The number of roller sets may be two or more, and is preferably adjusted according to the size of the first step mixture and the size of the chunk meat-like meat alternative to be produced.

The number of roller sets is preferably from 2 to 6, more preferably from 2 to 5, and still more preferably from 2 to 4.

A distance between the roller sets is, for example, preferably from 10 mm to 200 mm, more preferably from 20 mm to 150 mm, and still more preferably from 30 mm to 100 mm.

The distance between the roller sets refers to a perpendicular distance between a surface including rotation axes of rollers included in one roller set and a surface including rotation axes of rollers included in the other roller set.

A crossing angle between the roller sets is preferably appropriately adjusted according to the number of roller sets.

For example, in the case of two roller sets, the crossing angle is preferably from 80 degrees to 90 degrees, preferably from 85 degrees to 90 degrees, and still more preferably 90 degrees.

In the case of three or more roller sets, the crossing angle between adjacent roller sets may be the same as or different from each other.

The crossing angle between the adjacent roller sets is preferably from 10 degrees to 90 degrees, preferably from 15 degrees to 80 degrees, and still more preferably from 20 degrees to 70 degrees.

The crossing angle between the roller sets means a smaller one of crossing angles formed by a shaft of one of rollers included in one roller set and a shaft of one of rollers included in the other roller set.

### -(ii)-

Next, the method of stretching the mixture in a direction parallel to a rotation axis of a set of rollers by pressing the mixture by the rollers by putting the mixture between the set of rollers having parallel rotation axes and rotating in the same direction with reducing a distance between the rollers while rotating the mixture will be described.

A size of the roller is not particularly limited, and is appropriately adjusted according to the size of the chunk meat-like meat alternative to be produced.

A length of the roller in an axial direction is preferably, for example, from 10 mm to 2,000 mm.

A diameter of the roller (a diameter of a cross section of the roller in a plane orthogonal to the axial direction of the roller) is preferably, for example, from 10 mm to 1,000 mm.

The rollers are preferably arranged so that axes of the rollers are parallel.

A radius of the circle circumscribed by all the rollers included in a roller set (a radius of the first step mixture put between the rollers) may be constant or may vary during the second step.

Hereinafter, the radius of the circle circumscribed by all the rollers included in the roller set is also simply referred to as "specific radius".

In order to stretch the first step mixture, it is preferable to move one or both rollers included in the roller set and to change the specific radius during the second step.

In the case of changing the specific radius, a specific radius at the start of the second step is, for example, preferably from 1 mm to 200 mm, more preferably from 2 mm to 150 mm, and still more preferably from 5 mm to 100 mm.

In the case of changing the specific radius, a specific radius at the end of the second step is, for example, preferably from 1 mm to 100 mm, more preferably from 2 mm to 75 mm, and still more preferably from 5 mm to 50 mm.

The number of rotations of the roller is not particularly limited, and is, for example, from 10 rpm to 100 rpm.

From the viewpoint of stably rotating the mixture, the rotation directions of the set of rollers are preferably the same.

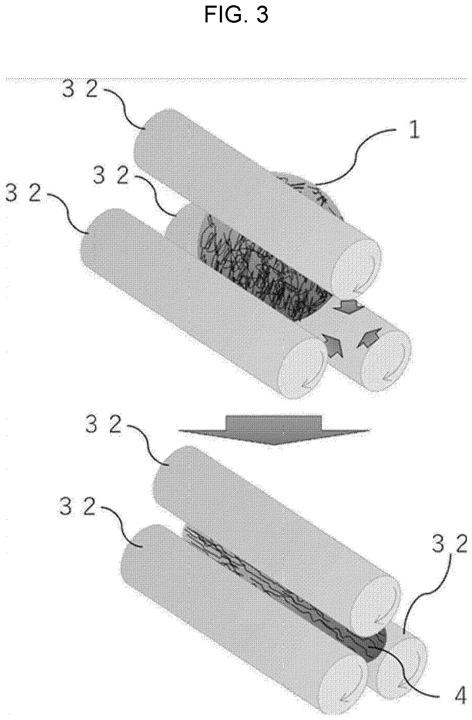

The mode of (ii) will be specifically described with reference to Fig. 3.

Note that Fig. 3 is an example of the mode of (ii), and the disclosure is not limited thereto.

Fig. 3 is a view showing a series of flows in which a first step mixture 1 is stretched by rotating the first step mixture 1 on surfaces of rollers of a set 32 that rotate to obtain a stretched mixture 4.

In (ii), the roller may have an uneven shape on the surface of the roller.

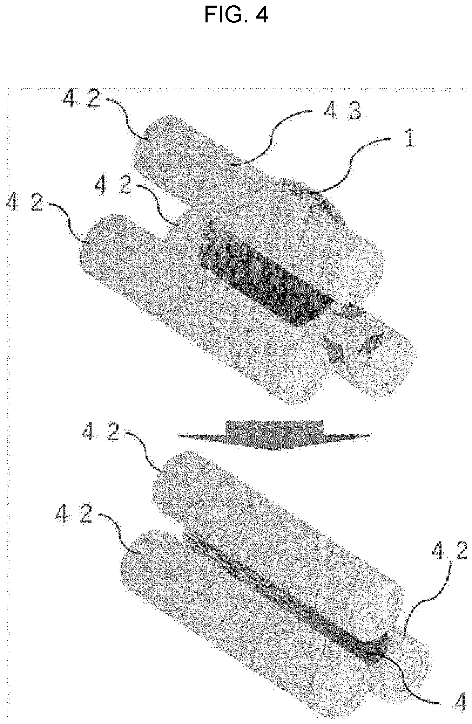

In (ii), in order to promote stretching of the first step mixture, it is preferable that the surface of the roller has an uneven surface with a shape of a spiral, the spiral moving from a center of the roller in a rotation axis direction to both ends of the roller in the rotation axis direction while the roller rotates. The mode thereof is illustrated in Fig. 4.

Fig. 4 is a view showing a series of flows in which a first step mixture 1 is stretched by rotating the first step mixture 1 on surfaces of rollers of a set 42 that rotate to obtain a stretched mixture 4.

The surface of each of the rollers included in the roller set 42 has an uneven surface 43 with a shape of a spiral, the spiral moving from a center of the roller in a rotation axis direction to both ends of the roller in the rotation axis direction while the roller rotates.

The shape of a spiral of the uneven surface 43 is preferably an uneven shape extending spirally from the center in the rotation axis direction of the roller as a starting point to both ends in the rotation axis direction of the roller.

### -(iii)-

Subsequently, details of the method of stretching the first step mixture by gripping and pulling a surface of the first step mixture will be described.

The method of gripping and pulling the surface of the first step mixture is not particularly limited.

Examples of the method of gripping and pulling the surface of the first step mixture include a method of gripping and pulling the surface of the first step mixture by hand.

In a case in which the surface of the first step mixture is gripped and pulled by hand, for example, it is preferable that the surface of the first step mixture is gripped by the right hand and the left hand and the surface of the first step mixture is pulled so that the shape of the first step mixture becomes a rod-like shape.

### -(iv)-

Subsequently, details of the method of stretching the first step mixture by pressing the first step mixture with a plate will be described.

The method (iv) is not particularly limited.

As the method (iv), for example, a method of stretching the first step mixture along the shape of a mold by putting the first step mixture into the mold and pressing the first step mixture with a plate, or a method of stretching the first step mixture by putting the first step mixture between two plates and pressing the first step mixture while rotating the first step mixture by moving the plates may be used.

The shape of the mold is not particularly limited, and from the viewpoint of the degree of orientation, it is preferable to form a shape in which a stretch ratio of the stretched mixture obtained after pressing with a plate is high.

### -(v)-

Next, the method of stretching the first step mixture by pressing the mixture by passing the mixture through a region surrounded by one roller and a guide disposed along a part of an outer circumference of the roller and in which a distance between the roller and the guide is reduced along a direction in which the roller rotates while rotating the first step mixture will be described.

A size of the roller is not particularly limited, and is appropriately adjusted according to the size of the chunk meat-like meat alternative to be produced.

A length of the roller in an axial direction is preferably, for example, from 10 mm to 2,000 mm.

A diameter of the roller (a diameter of a cross section of the roller in a plane orthogonal to the axial direction of the roller) is preferably, for example, from 10 mm to 3,000 mm.

The guide is preferably disposed along the outer circumference of the roller.

The region surrounded by one roller and the guide disposed along a part of the outer circumference of the roller may have a narrower width between the roller and the guide along the rotation direction of the roller.

Hereinafter, a radius of a circle in contact with the end of the guide on the upstream side in the rotation direction of the roller and the circumferential surface of the roller is referred to as "specific radius 2A". A radius of a circle in contact with the end of the guide on the downstream side in the rotation direction of the roller and the circumferential surface of the roller is referred to as "specific radius 2B".

In order to stretch the first step mixture, it is preferable that the specific radius 2A and the specific radius 2B are different in the second step.

In this case, the specific radius 2A at the start of the second step is preferably from 1 mm to 400 mm, more preferably from 2 mm to 300 mm, and still more preferably from 5 mm to 200 mm.

The specific radius 2B at the end of the second step is preferably from 1 mm to 200 mm, more preferably from 2 mm to 150 mm, and still more preferably from 5 mm to 100 mm

The number of rotations of the roller is not particularly limited, and is, for example, from 10 rpm to 100 rpm.

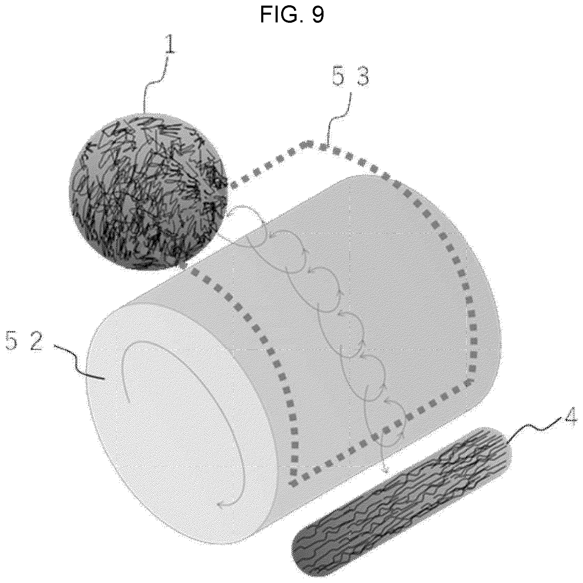

The mode of (v) will be specifically described with reference to Fig. 9.

Note that Fig. 9 is an example of the mode of (v), and the disclosure is not limited thereto.

Fig. 9 is a view showing a series of flows for obtaining the stretched mixture 4. The pressing is performed by putting first step mixture 1through a region surrounded by a roller 52 that rotates and a guide 53 disposed along a part of an outer circumference of the roller and in which a distance between the roller and the guide 53 is reduced along a direction in which the roller 52 rotates while rotating the first step mixture 1. As a result, the first step mixture 1 is stretched to obtain the stretched mixture 4.

In (v), the roller may have a surface having an uneven shape.

In (v), in order to promote stretching of the first step mixture, it is preferable that the surface of the roller has an uneven surface with a shape of a spiral, the spiral moving from a center of the roller in a rotation axis direction to both ends of the roller in the rotation axis direction while the roller rotates.

The details of the methods (i) to (v) of stretching the first step mixture are as described above.

The second step preferably include an operation to stretch the first step mixture, cut the stretched mixture, stack the stretched mixture cuttings so as to be aligned longitudinally, and stretch the stacked stretched mixture cuttings again.

When a series of the stretching the first step mixture, cutting the stretched mixture, stacking the stretched mixture cuttings so as to be aligned longitudinally, and stretching the stacked stretched mixture cuttings again in the operation is defined as one cycle, the number of cycles is preferably from 1 to 5, and more preferably from 2 to 4, from the viewpoint of the degree of orientation and productivity.

The method of cutting the stretched mixture is not particularly limited, and examples thereof include a method of cutting the stretched mixture by hand and a method of cutting the stretched mixture using a cutter or the like.

When the stretched mixture cuttings are stacked so as to be aligned longitudinally and the mixtures are stretched again, the stretching methods may be the same or different in each cycle.

In a case in which the chunk meat-like meat alternative to be produced contains oil and/or fat, a fat mass composition, other additives, and the like, these materials may be mixed when the stretched mixtures are stacked between cycles.

### (Third Step)

The method of producing a chunk meat-like meat alternative according to the disclosure preferably further includes, after the second step, a third step of molding the stretched mixture to obtain a molded product, and then heating the molded product to cure it.

In a case in which the binder contains a thermally irreversible gel-forming polysaccharide, formation of a gel containing a thermally irreversible gel-forming polysaccharide is promoted by heating the molded product. As a result, the molded product is cured, and the shape of the chunk meat-like meat alternative is more easily maintained.

The shape of the molded product is preferably a shape similar to, for example, steak meat or meat for stewing.

A method of molding the stretched mixture is not particularly limited. Examples thereof include a method of cutting the stretched mixture and a method of deforming the stretched mixture by applying an external force. From the viewpoint of the texture, a method of cutting the stretched mixture is preferable.

In a case in which the stretched mixture is cut, it is preferable to cut the stretched mixture in a direction orthogonal to the fiber axis direction of the textured protein contained in the stretched mixture.

In a case in which the stretched mixture is cut, it is preferable to cut the stretched mixture using a knife such as a cutter or a kitchen knife.

When the molded product is obtained by molding the stretched mixture, the third step preferably includes a step of cutting the stretched mixture perpendicularly to an orientation direction of fibers, and a step of bundling a plurality of stretched mixtures before the cutting or after the cutting.

When a plurality of stretched mixture cuttings are bundled and molded, the plurality of stretched mixture cuttings may be bundled and molded with aligned fiber directions, or the plurality of stretched mixtures or stretched mixture cuttings may be bundled with aligned fiber directions and then the bundled stretched mixtures or stretched mixture cuttings may be cut and molded perpendicularly to the fiber direction.

In the case of molding, the stretched mixture may be flattened to form a steak shape. Before flattening, the fiber bundle-shaped textured protein is less likely to be orientated in the direction perpendicular to the fiber direction of the fiber bundle-shaped textured protein. However, once flattened, a part of the fiber bundle-shaped textured protein is likely to be oriented in the direction perpendicular to the fiber direction of the fiber bundle-shaped textured protein.

A chunk meat-like meat alternative having an appearance similar to that of steak of livestock meat is easily obtained by molding the stretched mixture so that the fiber direction is in a thickness direction of the steak.

The third step may include a step of molding the stretched mixture to obtain a molded product, and then forming a pattern similar to fat, for example, a marbled pattern on a surface of the molded product for the purpose of brining an appearance of a chunk meat-like meat alternative closer to an appearance of livestock meat (hereinafter, also referred to as "fat-like portion forming step").

The fat-like portion forming step is preferably, for example, a step of forming a groove having a depth of 100 µm or more in the surface of the molded product and attaching oil and/or fat to the formed groove to form a fat-like portion.

Examples of a method of forming a groove in the surface of the molded product include a method of digging a surface with a knife and a method of forming a groove with a mold, and the method of forming a groove with a mold is preferable.

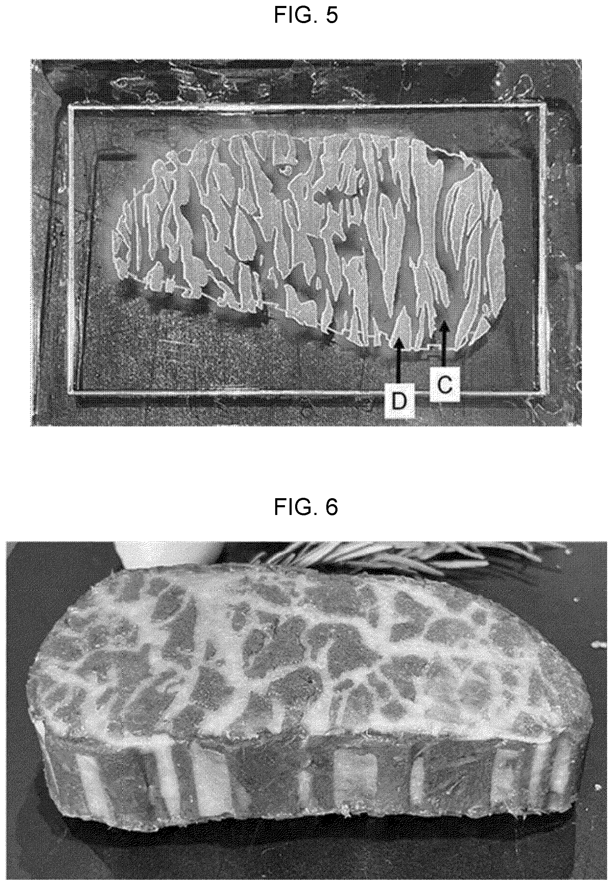

In a case in which the method of forming a groove with a mold is adopted as the method of forming a groove in the surface of the molded product, for example, a mold illustrated in Fig. 5 can be used as the mold.

The mold illustrated in Fig. 5 is a mold having a protrusion provided so as to obtain a groove having a shape close to a shape of fat of mass meat. The region of C in Fig. 5 is a protruding portion, and a groove is formed when the molded product comes into contact with C.

The region of D in Fig. 5 (the whitish region in Fig. 5) is a portion having no protrusion.

It is possible to form a groove in the surface of the molded product by pressing the mold against the surface of the molded product.

Subsequently, oil and/or fat is attached to the groove formed in the surface of the molded product, and the groove is filled therewith to form a pattern similar to that of fat.

When oil and/or fat is attached to the groove formed in the surface of the molded product, the oil and/or fat may be in a liquid state, a semi-solid state in which a liquid and a solid are mixed, or a solid state, and the liquid state or the semi-solid state is preferable.

When oil and/or fat is attached to the groove formed in the surface of the molded product, the oil and/or fat may be attached in an emulsion state.

In a case in which the oil and/or fat is attached in an emulsion state, an emulsion containing a gelling agent, oil and/or fat, and water may be used. The emulsion containing a gelling agent, oil and/or fat, and water is hereinafter referred to as a gelling emulsifier.

It is preferable that the gelling emulsifier is attached to the groove formed in the surface of the molded product, and then the gelling emulsion attached to the groove is gelled.

The gelling emulsifier is preferably an oil-in-water emulsion.

An oil drop diameter of the oil and/or fat in the gelling emulsifier is preferably from 20 µm to 500 µm, more preferably from 30 µm to 400 µm, and still more preferably from 50 µm to 300 µm.

Examples of a method of gelling the gelling emulsifier attached to the groove include a method of gelling the molded product in which the gelling emulsifier is attached to the groove by putting the molded product into an aqueous solution containing a gelling accelerator.

Examples of the fat-like portion forming step include a step of printing on the surface of the chunk meat-like meat alternative with a white ink using a food printer and a step of cutting a white film into a marbled shape and attaching the film to the surface of the raw meat-like meat alternative.

A method of heating the molded product is not particularly limited, and examples thereof include wet heating (a heating method using water as a heat resource), dry heating (a heating method using a material other than water such as metal or gas as a heat resource), and dielectric heating.

In the case of producing a raw meat-like appearance, from the viewpoint of heat resistance of a colorant, it is preferable that the molded product is uniformly and quickly heated by a wet heating method after vacuum pouch of the molded product.

Examples of the wet heating include a steaming method and a method of boiling in water, and the wet heating is preferably a method of boiling in water because the molded product can be uniformly and quickly treated thereby.

A heating temperature of the molded product is preferably one that brings, for example, a temperature inside the molded product to from 70°C to 100°C.

The temperature inside the molded product is a value measured by a thermometer.

As the thermometer, for example, a data logger (TR-W550) manufactured by KEYENCE CORPORATION can be used. The internal temperature of the molded product can be measured by inserting a thermocouple into the chunk meat-like meat alternative during the vacuum pouch.

### (Method of Cooking Chunk Meat-Like Meat Alternative)

A method of cooking the chunk meat-like meat alternative is not particularly limited. Examples thereof include a method of heating using a frying pan, an iron plate, or a hot plate in the case of steak. In view of the texture, it is preferable to provide steak at a temperature at the center of the steak that is below a softening temperature of the polysaccharide, which allows gelation of the binder to be reversible.

### EXAMPLES

Examples will be described below, but the present invention is not limited to these Examples at all. Note that, in the following description, unless otherwise specified, "part" and "%" are all on a mass basis.

### <Preparation of Fiber Bundle-Shaped Textured Protein>

Defatted soybean powder (SHOWA FRESH RF, manufactured by Showa Sangyo Co., Ltd.) as a vegetable protein and a wheat gluten (PRO-GLU 65, manufactured by THE TORIGOE CO., LTD.) as a vegetable protein were mixed at a ratio of 7:3 (= defatted soybean powder:wheat gluten [mass ratio]) to obtain a mixed powder 1.

A cooling die (die width: 50 mm, lip clearance: 3 mm) having a length of 350 mm was attached to a discharge portion of a twin screw extruder which was set to have a screw length was 1,100 mm and a maximum temperature of a screw tip portion of 155°C, and an outlet temperature of the cooling die was stabilized at 105°C. The mixed powder 1 was introduced into an extruder at 250 g/min, and discharged from the extruder together with adding, to the extruder, water at a amount of 50% by mass of water with respect to the mass of the mixed powder 1, thereby obtaining a fiber bundle-shaped textured protein 1 having a fiber axis direction in the same direction as the extrusion direction.

### <Example 1>

### (First Step)

The fiber bundle-shaped textured protein 1 was boiled in 3 L (liter) of boiling water for 10 minutes and subjected to drain.

The fiber bundle-shaped textured protein 1 after being drained was cut to a length of about 100 mm and torn along a fiber axis direction so as to have a width of about 5 mm. An aqueous solution containing SAN GRILL BEEF TASTE 3457E (a seasoning not using an animal material, manufactured by San-Ei Gen F.F.I.) as a seasoning (concentration; 5% by mass of the seasoning with respect to an entirety of the aqueous solution) was boiled for 10 minutes to obtain a strip-shaped fiber bundle-shaped textured protein 1. The strip-shaped fiber bundle-shaped textured protein 1 was immersed in an aqueous solution containing SAN BEET CONC No. 4948 (a colorant, manufactured by San-Ei Gen F.F.I.) as a colorant (concentration; 3% by mass of the colorant with respect to an entirety of the aqueous solution) to obtain a strip-shaped fiber bundle-shaped textured protein 2.

Thereafter, 7.5 g of GENUTINE 310-C (carrageenan, manufactured by Sansho Co., Ltd.), which contained a thermally reversible gel-forming polysaccharide, and 7.5 g of ALGINIC ACID 429S (sodium alginate containing a hardening agent, manufactured by KIMICA Corporation) , which contained a thermally irreversible gel-forming polysaccharide, as binders, and 30 g of water were added to the 150 g of the strip-shaped fiber bundle-shaped textured protein 2, and the mixture was uniformly mixed, thereby obtaining a first step mixture.

### (Second Step)

The first step mixture was formed into a spherical shape having a diameter of about 60 mm, and then the first step mixture was stretched by passing the first step mixture through a set of six rollers arranged in a regular hexagon as illustrated in Fig. 1, thereby obtaining a stretched mixture having a stretch ratio of 2.4 times.

Note that details of all the six rollers having the same size are as follows.

The respective rollers were connected to a power transmission apparatus (not illustrated), and were rotated in a direction of the arrow shown on the roller in Fig. 1.

### -Details of Roller-

· Length of roller in rotation axis direction: 15 mm
· Diameter of roller: 30 mm
· Rotation speed of roller: 10 rpm

### (Third Step)

The stretched mixture was processed so as to have a shape of a fillet steak having a thickness of 25 mm by cutting the stretched mixture into lengths equal to the thickness of steak in a direction orthogonal to the fiber axis direction of the fiber bundle-shaped textured protein contained in the stretched mixture, and a plurality of stretched mixture cuttings were bundled so that the fiber direction of the fiber bundle-shaped textured protein was oriented in the thickness direction of the chunk meat-like meat alternative, thereby obtaining a molded product. The molded product was vacuum-pouched and then heated for 1 minute so that the temperature inside the molded product was 75°C. Thereafter, the molded product was rapidly cooled with ice water to obtain a chunk meat-like meat alternative.

### <Example 2>

A chunk meat-like meat alternative was obtained by the same procedure as that of Example 1, except that (Second Step) was changed to the following procedure.

### (Second Step)

The first step mixture was formed into a spherical shape having a diameter of about 60 mm, and then the first step mixture was stretched by passing the first step mixture through a set of six rollers arranged in a regular hexagon as illustrated in Fig. 1, thereby obtaining a stretched mixture.

Thereafter, the stretched mixture was cut at an intermediate position in a longitudinal direction of the stretched mixture, the stretched mixture cuttings were stacked and arranged to form a columnar shape so that stretched mixture cuttings are aligned longitudinally, and the stacked stretched mixtures were stretched by passing the stacked stretched mixtures through a roller set arranged as illustrated in Fig. 1. The same operation was performed again to obtain a stretched mixture having a stretch ratio of 4.8 times.

Note that the roller had the same conditions as in Example 1.

### <Example 3>

A chunk meat-like meat alternative was obtained by the same procedure as that of Example 1, except that (Second Step) was changed to the following procedure.

### (First Step)

The first step mixture was formed into a spherical shape having a diameter of about 60 mm, and then the first step mixture was stretched by passing the first step mixture through a set of six rollers arranged in a regular hexagon in two stages as illustrated in Fig. 2, thereby obtaining a stretched mixture having a stretch ratio of 5.4 times.

Note that details of the set of six rollers all having the same size are as follows.

The respective rollers were connected to a power transmission apparatus (not illustrated), and were rotated in a direction of the arrow described on the roller in Fig. 2.

### -Roller set 22-

· Length of roller in rotation axis direction: 15 mm
· Diameter of roller: 30 mm
· Rotation speed of roller: 10 rpm

### -Roller set 23-

· Length of roller in rotation axis direction: 10 mm
· Diameter of roller: 30 mm
· Rotation speed of roller: 10 rpm

### <Example 4>

A chunk meat-like meat alternative was obtained by the same procedure as that of Example 1, except that (Second Step) was changed to the following procedure.

### (Second Step)

The first step mixture was formed into a spherical shape having a diameter of about 60 mm, and then the first step mixture was stretched by rotating the first step mixture on a surface of a set of three rollers arranged as illustrated in Fig. 3, thereby obtaining a stretched mixture having a stretch ratio of 3 times.

Note that details of all the three rollers having the same size are as follows.

The respective rollers were connected to a power transmission apparatus (not illustrated), and were rotated in a direction of the arrow described on the roller in Fig. 3.

### -Roller set 32-

· Length of roller in rotation axis direction: 500 mm
· Diameter of roller: 50 mm
· Rotation speed of roller: 10 rpm
· Specific radius at start of second step: 30 mm
· Specific radius at start of second step: 20 mm

### <Example 5>

A chunk meat-like meat alternative was obtained by the same procedure as that of Example 1, except that (Second Step) was changed to the following procedure.

### (Second Step)

The first step mixture was formed into a spherical shape having a diameter of about 60 mm, and then the first step mixture was stretched by pressing the first step mixture while rotating the first step mixture on a surface of a set of three rollers with guides (having an uneven shape) arranged as illustrated Fig. 4, thereby obtaining a stretched mixture having a stretch ratio of 3 times.

Note that details of all the three rollers having the same size are as follows.

The respective rollers were connected to a power transmission apparatus (not illustrated), and were rotated in a direction of the arrow described on the roller in Fig. 4.

### -Roller 42-

· Length of roller in axis direction: 500 mm
· Diameter of roller: 50 mm
· Rotation speed of roller: 10 rpm
· Radius of circle in contact with all three rollers at start of second step: 30 mm
· Radius of circle in contact with all three rollers at start of second step: 20 mm

### <Example 6>

A chunk meat-like meat alternative was obtained by the same procedure as that of Example 5, except that (Second Step) was changed to the following procedure.

### (Second Step)

The first step mixture was formed into a spherical shape having a diameter of about 60 mm, and then the first step mixture was stretched by pressing the first step mixture while rotating the first step mixture on a surface of a set of three rollers with guides (having an uneven shape) arranged as illustrated Fig. 4, thereby obtaining a stretched mixture having a stretch ratio of 3 times.

Thereafter, the stretched mixture was cut at an intermediate position in a longitudinal direction of the stretched mixture, the stretched mixture cuttings were stacked and arranged to form a columnar shape so that stretched mixture cuttings are aligned longitudinally, and the stacked stretched mixtures were stretched by pressing the stacked stretched mixtures against the roller set arranged as illustrated in Fig. 4 while rotating the stacked stretched mixtures, thereby obtaining a stretched mixture having a total stretch ratio of 6 times.

Note that the roller had the same conditions as in Example 5.

### <Example 7>

A chunk meat-like meat alternative was obtained by the same procedure as that of Example 5, except that (Second Step) was changed to the following procedure.

### (Second Step)

The first step mixture was formed into a spherical shape having a diameter of about 60 mm, and then the first step mixture was stretched by pressing the first step mixture while rotating the first step mixture on a surface of a set of three rollers with guides arranged as illustrated Fig. 4, thereby obtaining a stretched mixture having a stretch ratio of 3 times.

Thereafter, the stretched mixture was cut at an intermediate position in a longitudinal direction of the stretched mixture, the stretched mixture cuttings were stacked and arranged to form a columnar shape so that stretched mixture cuttings are aligned longitudinally, and the stacked stretched mixtures were pressed against the roller set arranged as illustrated in Fig. 4 while rotating the stacked stretched mixtures. This operation was repeated again to obtain a stretched mixture having a total stretch ratio of 12 times.

Note that the roller had the same conditions as in Example 5.

### <Example 8>

A chunk meat-like meat alternative was obtained by the same procedure as that of Example 7, except that the fiber direction of the fiber bundle-shaped textured protein was changed from the thickness direction of the chunk meat-like meat alternative to the width direction of the chunk meat-like meat alternative in (Third Step).

### <Example 9>

A chunk meat-like meat alternative was obtained by the same procedure as that of Example 7, except that the step of immersing the strip-shaped fiber bundle-shaped textured protein into the aqueous solution containing SAN BEET CONC No. 4948 (a colorant, manufactured by San-Ei Gen F.F.I.) as a colorant (concentration; 3% by mass of the colorant with respect to an entirety of the aqueous solution) to obtain a strip-shaped fiber bundle-shaped textured protein was omitted in (First Step).

### <Example 10>

A chunk meat-like meat alternative was obtained by the same procedure as that of Example 7, except that the binder was changed from "7.5 g of GENUTINE 310-C (carrageenan, manufactured by Sansho Co., Ltd.) containing a thermally reversible gel-forming polysaccharide and 7.5 g of ALGINIC ACID 429S (sodium alginate containing a hardening agent, manufactured by KIMICA Corporation) containing a thermally irreversible gel-forming polysaccharide" to "15 g of GENUTINE 310-C (carrageenan, manufactured by Sansho Co., Ltd.) containing a thermally reversible gel-forming polysaccharide" in (First Step).

### <Example 11>

A chunk meat-like meat alternative was obtained by the same procedure as that of Example 7, except that the binder was changed from "7.5 g of GENUTINE 310-C (carrageenan, manufactured by Sansho Co., Ltd.) containing a thermally reversible gel-forming polysaccharide, 7.5 g of ALGINIC ACID 429S (sodium alginate containing a hardening agent, manufactured by KIMICA Corporation) containing a thermally irreversible gel-forming polysaccharide, and 30 g of water" to "45 g of potato starch" in (First Step).

### <Example 12>

A chunk meat-like meat alternative was obtained by the same procedure as that of Example 7, except that a protein obtained by cutting a commercially available textured protein (What the cluck, manufactured by The Vegetarian Butcher Japan Inc.) into a length of about 30 mm and tearing the cut textured protein along a fiber axis direction so as to have a width of about 5 mm was used instead of the strip-shaped fiber bundle-shaped textured protein 1 in (First Step).

### <Example 13>

A chunk meat-like meat alternative was obtained by the same procedure as that of Example 7, except that a protein obtained by cutting a commercially available textured protein (APEX 1000, manufactured by Fuji Oil Co., Ltd.) into a length of about 30 mm and tearing the cut textured protein so as to have a fibrous shape with a width of about 5 mm was used instead of the strip-shaped fiber bundle-shaped textured protein 1 in (First Step).

### <Example 14>

A fatty chunk meat-like meat alternative was obtained by the same procedure as that of Example 7, except that 30 g of a fat mass composition prepared by the following procedure was mixed with the strip-shaped fiber bundle-shaped textured protein 2, a binder, and water to obtain a first step mixture in the first step.

### (Preparation of Fat Mass Composition)

### (1) Droplet Forming Step

An aqueous phase and an oil phase were prepared as follows.

Aqueous phase: 99.5 parts by mass of tap water and 0.5 parts by mass of RYOTO SUGAR ESTER M-1695 (manufactured by Mitsubishi Chemical Corporation) as a surfactant were weighed to a total of 5 kg, and the weighed materials were stirred using THREE-ONE MOTOR (manufactured by Shinto Scientific Co., Ltd.) for 30 minutes to be completely dissolved.

Oil phase: 1 kg of coconut oil (product name: ORGANIC PREMIUM COCONUT OIL (M041), manufactured by COCOWELL Corporation) as oil and/or fat was weighed.

Membrane emulsification was performed using a pipe-shaped SPG membrane (manufactured by SPG Technology Co., Ltd., pore size 50 µm) with an aqueous phase as a continuous phase and an oil phase as a dispersed phase. Specifically, the pipe-shaped SPG membrane was inserted and disposed in a tubular container, and from one end to the other end of the container, the aqueous phase was allowed to flow at a flow rate of 50 mL/min inside the pipe-shaped SPG membrane (inner conduit), and the oil phase was allowed to flow at a flow rate of 10 mL/min outside the pipe-shaped SPG membrane (outer conduit (flow path between the container and the SPG membrane)).

As a result, an aqueous solution containing droplets containing oil and/or fat (hereinafter, also referred to as "droplet dispersion") was obtained.

Note that the droplet containing oil and/or fat had a particle diameter of 190 µm and a CV value of 19%.

The particle diameter and CV value of the droplet containing oil and/or fat were measured by a transmission optical microscope.

The droplet dispersion collected in a Petri dish was observed with a transmission optical microscope and imaged at an objective magnification of 5 times. 200 or more images of the droplet containing oil and/or fat included in the screen obtained by imagining were selected, and an equivalent circle diameter of each droplet was calculated with image process software (for example, ImageJ). The equivalent circle diameter of each droplet refers to a diameter of a perfect circle corresponding to an area of the image of the droplet. An arithmetic average value of the calculated equivalent circle diameters of the respective droplets was calculated, and the arithmetic average value was defined as an "average particle diameter of droplets containing oil and/or fat".

The CV value of the droplet containing oil and/or fat is a value determined by the following equation.

CV value (%) of droplet containing oil and/or fat = (Standard deviation of equivalent circle diameter of droplet containing oil and/or fat/average particle diameter of droplets containing oil and/or fat) × 100

The standard deviation of the equivalent circle diameter of the droplet containing oil and/or fat is a standard deviation of the equivalent circle diameters of 200 droplets containing oil and/or fat calculated in the measurement of the average particle diameter of the droplets containing oil and/or fat.

### (2) Oil and/or fat Solidifying Step

The droplet dispersion was added to a separatory funnel and then allowed to stand for 30 minutes. Since the droplet dispersion was separated into a phase containing a droplet containing oil and/or fat and an aqueous phase, the aqueous phase was discharged from the separatory funnel, and the phase containing the droplet containing oil and/or fat was recovered.

The recovered phase containing the droplet containing oil and/or fat was allowed to stand and cooled in a refrigerator having an internal temperature of 5°C for 1 hour to solidify the oil and/or fat, thereby obtaining an aqueous solution containing particles (hereinafter, also referred to as "particle-containing solution").

### (3) Crosslinking Step

1 part by mass of sodium alginate (KIMICA ALGIN I-1, manufactured by KIMICA Corporation) as an edible ionically crosslinkable polymer, 0.5 parts by mass of RYOTO SUGAR ESTER M-1695 (manufactured by Mitsubishi Chemical Corporation) as a surfactant, and 98.5 parts by mass of tap water were mixed to obtain an aqueous solution containing an edible ionically crosslinkable polymer (hereinafter, also referred to as "ionically crosslinkable polymer solution").

100 parts by mass of the particle-containing solution was added to 100 parts by mass of the ionically crosslinkable polymer solution, and the mixture was slowly stirred with a stirrer (THREE ONE MOTOR, manufactured by Yamato Scientific Co., Ltd.), thereby obtaining a solution 1. The obtained solution 1 was poured into a stainless steel pad so that a thickness of the solution was 3 mm.

1 part by mass of calcium chloride (food additive grade, manufactured by FUJIFILM Wako Pure Chemical Corporation) as a salt containing cations was dissolved in 99 parts by mass of tap water to adjust a cation-containing aqueous solution 1. The cation-containing aqueous solution 1 the mass of which is the same as that of the solution 1 contained in a stainless pad was poured into the stainless pad, and the mixed solution was allowed to stand in a refrigerator having an internal temperature of 5°C for 2 hours to crosslink (gel) the edible ionically crosslinkable polymer, thereby obtaining a crude fat mass composition.

The crude fat mass composition was washed with tap water, moisture on a surface was wiped off with KIM TOWEL (registered trademark), and the wiped crude fat mass composition was cut into bars of about 1 mm × 1 mm × 30 mm. Oil and/or fat attached to the surface of the crude fat mass composition was washed with edible ethanol to obtain a fat mass composition.

### <Example 15>

A fatty chunk meat-like meat alternative was obtained by the same procedure as that of Example 14, except that (Third Step) was changed to the following procedure. Fig. 8 illustrates a schematic front view showing a cross section of the obtained fatty chunk meat-like meat alternative.

### (Third Step)

The stretched mixture was cut into lengths equal to a thickness of steak in a direction orthogonal to a fiber axis direction of the fiber bundle-shaped textured protein contained in the stretched mixture. The plurality of stretched mixture cuttings were placed in a steak-like mold having uneven grooves so that a fiber direction was in a thickness direction, and grooves similar to the fat shape of marbled meat were formed in the surface of the cut stretched mixture. The solution 1, which was the gelling emulsion prepared by the same procedure as that of (3) Crosslinking Step in Example 14 (Preparation of Fat Mass Composition), was applied to the formed grooves. The molded product to which the solution 1 was applied was immersed in the cation-containing aqueous solution 1, which was the aqueous solution containing a gelling accelerator prepared by the same procedure as that of (3) Crosslinking Step in Example 14 (Preparation of Fat Mass Composition), to gel the ionically crosslinkable polymer contained in the solution 1, thereby obtaining a molded product in which the solution 1 was gelled. The molded product obtained by gelling the solution 1 was vacuum-pouched and then heated for 1 minute so that the temperature inside the molded product was 75°C. Thereafter, the molded product was rapidly cooled with ice water to obtain a chunk meat-like meat alternative having a marbled pattern. Fig. 6 illustrates the obtained chunk meat-like meat alternative having a marbled pattern.

### <Example 16>

A chunk meat-like meat alternative was obtained by the same procedure as that of Example 1, except that (Second Step) was changed to the following procedure.

### (Second Step)

The first step mixture was formed into a spherical shape having a diameter of about 60 mm, and the first step mixture was pressed and stretched while rotating the first step mixture by placing the first step mixture between two plates and then moving the plates, thereby obtaining a stretched mixture having a stretch ratio of 12 times.

### <Example 17>

A chunk meat-like meat alternative was obtained by the same procedure as that of Example 1, except that (Second Step) was changed to the following procedure.

### (Second Step)

The first step mixture was formed into a spherical shape having a diameter of about 60 mm, and then the first step mixture was pulled and stretched by hand, thereby obtaining a stretched mixture having a stretch ratio of about 12 times.

### <Example 18>

A chunk meat-like meat alternative was obtained by the same procedure as that of Example 1, except that (Second Step) was changed to the following procedure.

### (Second Step)

The first step mixture was formed into a spherical shape having a diameter of about 60 mm, and then the first step mixture was stretched by passing the first step mixture through a region surrounded by one roller and a guide disposed as illustrated in Fig. 9 along a part of an outer circumference of the roller and in which widths of the roller and the guide narrowed along a direction in which the roller rotated while rotating the first step mixture and pressing the mixture, thereby obtaining a stretched mixture having a stretch ratio of 3 times.

Note that details of a size of the roller are as follows.

The rollers were connected to a power transmission apparatus (not illustrated), and were rotated in a direction of the arrow described on the roller in Fig. 9.

### -Roller set 52-

· Length of roller in rotation axis direction: 500 mm
· Diameter of roller: 500 mm
· Rotation speed of roller: 10 rpm
· Specific radius 2A at start of second step: 30 mm
· Specific radius 2B at start of second step: 20 mm

### <Example 19>

A chunk meat-like meat alternative was obtained by the same procedure as that of Example 14, except that a cooling die having a length of 300 mm (slit shape: concentric circle type (inner circle diameter: 29 mm, outer circle diameter: 35 mm), lip clearance: 3 mm) was attached to a discharge port of a twin screw extruder, and the mixed powder 1 was introduced into the extruder at 530 g/min in <Preparation of Fiber-Shaped Textured Protein>.

### <Comparative Example 1>

A fatty chunk meat-like meat alternative was obtained by the same procedure as that of Example 2, except that (Second Step) and (Third Step) were changed to the following procedures.

### (Second Step)

The first step mixtures were combined into a spherical shape to obtain a spherical mixture.

### (Third Step)

The spherical mixture was formed to have a fillet shape of steak, thereby obtaining a cut molded product. The molded product was vacuum-pouched and then heated for 1 minute so that the temperature inside the molded product was 75°C. Thereafter, the molded product was rapidly cooled with ice water to obtain a chunk meat-like meat alternative.

### <Comparative Example 2>

The same treatment as that of Example 1 was performed until mixing with the binder except that the fiber bundle-shaped textured protein 1 which was cut into sheets of about 40 mm × about 25 mm was used in (First Step) . The fiber bundle-shaped textured proteins were taken out one by one from the mixture, and aligned by hand in the form of a steak fillet so that the fiber directions were aligned, thereby obtaining a stacked molded product. The molded product was vacuum-pouched and then heated for 1 minute so that the temperature inside the molded product was 75°C. Thereafter, the molded product was rapidly cooled with ice water to obtain a chunk meat-like meat alternative.

### <Evaluation>

### (Visual Evaluation)

Before and after subjecting the chunk meat-like meat alternative obtained in each Example to heat-cooking on a hot plate at 200°C, the following evaluations were visually performed by ten panelists.

### -Visual Evaluation Before Cooking ("Appearance Before Cooking" in Table 1)-

It was evaluated whether or not the chunk meat-like meat alternative before cooking had an appearance similar to steak meat, and the number of panelists who answered in the affirmative was counted.

### -Visual Evaluation After Cooking ("Appearance After Cooking" in Table 1)-

It was evaluated whether or not the chunk meat-like meat alternative after cooking had an appearance similar to steak meat, and the number of panelists who answered in the affirmative was counted.

### -Visual Evaluation of Cross Section After Cooking ("Cross Section After Cooking" in Table 1)-

The chunk meat-like meat alternative after cooking was cut in the thickness direction, it was evaluated whether or not a cut surface had an appearance similar to a cut surface of steak meat after cooking, and the number of panelists who answered in the affirmative was counted.

### (Analysis of Degree of Orientation)

The specific degree of orientation of the stretched mixture was measured by the method described in -Method of Measuring Specific Degree of Orientation- described above.

The degree of orientation of the fiber direction in the cross section of the chunk meat-like meat alternative was measured by the method described in (Method of Measuring Degree of Orientation of Fiber Direction in Cross Section of Chunk Meat-Like Meat Alternative) described above.

### (Analysis of Integrated Degree of Orientation)

The specific degree of orientation of the stretched mixture was measured by the method described in -Method of Measuring Specific Integrated Degree of Orientation-described above.

The integrated degree of orientation of the fiber direction in the cross section parallel to the fiber axis direction of the fiber bundle-shaped textured protein of the chunk meat-like meat alternative was measured by the method described in -Measurement Procedure of Integrated Degree of Orientation of Chunk Meat-Like Meat Alternative- described above.

### (Analysis of Standard Deviation of Orientation Angle)

The specific degree of orientation of the stretched mixture was measured by the method described in -Method of Measuring Specific standard deviation of orientation angle-described above.

The standard deviation of the orientation angle of the fiber direction in the cross section parallel to the fiber axis direction of the fiber bundle-shaped textured protein of the chunk meat-like meat alternative was measured by the method described in -Measurement Procedure of Standard Deviation of Orientation Angle of Chunk Meat-Like Meat Alternative- described above.

### (Texture Evaluation)

Ten panelists ate the chunk meat-like meat alternative after cooking. Whether or not the meat had a texture similar to that of steak meat after cooking was evaluated, and the number of panelists who answered in the affirmative was counted.

### (Evaluation Criteria)

The evaluation criteria for each evaluation were as follows.

### -Evaluation Criteria-

S: Nine or more panelists answered in the affirmative.
A: Seven or eight panelists answered in the affirmative.
B: From four to six panelists answered in the affirmative.
C: Three or less panelists answered in the affirmative.

**[Table 1]**

| | Preparation method | | | | | | | Material | | | |
|---|---|---|---|---|---|---|---|---|---|---|---|
| | Fig. | Method | Number of Stretching times (number of stages) | Stretch ratio | Specific degree of orientation of stretched mixture | Specific integrated degree of orientation of stretched mixture | Specific standard deviation of orientation angle of stretched mixture | Fiber bundle-shaped textured protein | Coloring | Binder | Oil and fat |
| Example 1 | Fig. 1 | (i) | 1 | 2.4 | 1.1 | 1.12 | 8.2 | 1 | Present | 310C/429S | Absent |
| Example 2 | Fig. 1 | (i) | 3 | 4.8 | 1.22 | 1.21 | 7.9 | 1 | Present | 310C/429S | Absent |
| Example 3 | Fig. 2 | (i) | 1 (3) | 5.4 | 1.29 | 1.25 | 8.4 | 1 | Present | 310C/429S | Absent |
| Example 4 | Fig. 3 | (ii) | 1 | 3 | 1.15 | 1.13 | 7.2 | 1 | Present | 310C/429S | Absent |
| Example 5 | Fig. 4 | (ii) | 1 | 3 | 1.18 | 1.19 | 6.9 | 1 | Present | 310C/429S | Absent |
| Example 6 | Fig. 4 | (ii) | 2 | 6 | 1.32 | 1.28 | 8.3 | 1 | Present | 310C/429S | Absent |
| Example 7 | Fig. 4 | (ii) | 3 | 12 | 1.44 | 1.42 | 8.7 | 1 | Present | 310C/429S | Absent |
| Example 8 | Fig. 4 | (ii) | 3 | 12 | 1.43 | 1.41 | 7.1 | 1 | Present | 310C/429S | Absent |
| Example 9 | Fig. 4 | (ii) | 3 | 12 | 1.47 | 1.42 | 6.2 | 1 | Absence | 310C/429S | Absent |
| Example 10 | Fig. 4 | (ii) | 3 | 12 | 1.42 | 1.39 | 8.3 | 1 | Present | Only 310C | Absent |
| Example 11 | Fig. 4 | (ii) | 3 | 12 | 1.41 | 1.38 | 7.2 | 1 | Present | Potato starch | Absent |
| Example 12 | Fig. 4 | (ii) | 3 | 12 | 1.36 | 1.31 | 8.9 | WTC | Present | 310C/429S | Absent |
| Example 13 | Fig. 4 | (ii) | 3 | 12 | 1.16 | 1.15 | 7.1 | A1000 | Present | 310C/429S | Absent |
| Example 14 | Fig. 4 | (ii) | 3 | 12 | 1.45 | 1.48 | 6.8 | 1 | Present | 310C/429S | Fat mass composition inside |
| Example 15 | Fig. 4 | (ii) | 3 | 12 | 1.49 | 1.49 | 7.3 | 1 | Present | 310C/429S | Fat mass composition inside and outside |
| Example 16 | - | (iv) | 3 | 12 | 1.42 | 1.41 | 8.9 | 1 | Present | 310C/429S | Absent |
| Example 17 | - | (iii) | 3 | 12 | 1.41 | 1.36 | 8.1 | 1 | Present | 310C/429S | Absent |
| Comparative Example 1 | - | - | - | - | - | - | 42 | 1 | Present | 310C/429S | Absent |
| Comparative Example 2 | - | - | - | - | - | - | 7.3 | 1 | Present | 310C/429S | Absent |
| Example 18 | Fig. 9 | (v) | 1 | 3 | 1.16 | 1.18 | 8.2 | 1 | Present | 310C/429S | Absent |
| Example 19 | Fig. 4 | (ii) | 3 | 12 | 1.45 | 1.42 | 8.5 | 1 | Present | 310C/429S | Fat mass composition inside |

**[Table 2]**

| | Fibrous texture of chunk meat-like meat alternative | | | | | Before cooking | After cooking | | |
|---|---|---|---|---|---|---|---|---|---|
| | Degree of orientation in cross section parallel to fiber axis direction | Integrated degree of orientation | Orientation angle standard deviation | Orientation direction | Integrated degree of orientation in cross section perpendicular to fiber axis direction | Appearance | Appearance | Cross section | Texture |
| Example 1 | 1.11 | 1.12 | 8.6 | Thickness | 1.03 | B | B | B | S |
| Example 2 | 1.23 | 1.19 | 8.2 | Thickness | 1.08 | A | A | A | S |
| Example 3 | 1.28 | 1.23 | 7.5 | Thickness | 1.07 | A | A | A | S |
| Example 4 | 1.17 | 1.18 | 8.4 | Thickness | 1.09 | B | B | B | S |
| Example 5 | 1.19 | 1.19 | 7.8 | Thickness | 1.08 | B | B | B | S |
| Example 6 | 1.31 | 1.28 | 7.3 | Thickness | 1.06 | S | S | S | S |
| Example 7 | 1.42 | 1.4 | 8.1 | Thickness | 1.09 | S | S | S | S |
| Example 8 | 1.45 | 1.41 | 8.2 | Width | 1.06 | A | A | A | S |
| Example 9 | 1.46 | 1.42 | 7.9 | Thickness | 1.07 | - | S | S | S |
| Example 10 | 1.43 | 1.41 | 9.1 | Thickness | 1.08 | S | S | S | B |
| Example 11 | 1.44 | 1.39 | 8.2 | Thickness | 1.06 | S | S | S | B |
| Example 12 | 1.38 | 1.32 | 7.6 | Thickness | 1.09 | S | S | S | S |
| Example 13 | 1.18 | 1.19 | 8.4 | Thickness | 1.06 | B | B | B | S |
| Example 14 | 1.46 | 1.41 | 8.2 | Thickness | 1.09 | S | S | S | S |
| Example 15 | 1.48 | 1.46 | 8.9 | Thickness | 1.08 | S | S | S | S |
| Example 16 | 1.41 | 1.42 | 7.1 | Thickness | 1.09 | S | S | S | S |
| Example 17 | 1.42 | 1.39 | 9.1 | Thickness | 1.08 | S | S | S | S |
| Comparative Example 1 | 1.01 | 1.08 | 38 | - | - | C | C | C | S |
| Comparative Example 2 | 1.47 | 1.42 | 8.1 | Thickness | 1.41 | C | C | S | S |
| Example 18 | 1.17 | 1.15 | 7.3 | Thickness | 1.07 | B | B | B | S |
| Example 19 | 1.46 | 1.42 | 8.8 | Thickness | 1.09 | S | S | S | S |

Abbreviations and the like in Tables 1 and 2 are explained below.
· Fiber bundle-shaped textured protein: "1" means the fiber bundle-shaped textured protein 1. "WTC" means a commercially available textured protein (WHAT THE CLUCK, manufactured by The Vegetarian Butcher Japan Inc.). "A1000" means a commercially available textured protein (APEX 1000, manufactured by FUJI OIL CO., LTD.).
· Binder: "310-C" means GENUTINE 310-C (carrageenan, manufactured by Sansho Co., Ltd.), which contains a thermally reversible gel-forming polysaccharide. "429S" means ALGINIC ACID 429S (sodium alginate containing a hardening agent, manufactured by KIMICA Corporation), which contains a thermally irreversible gel-forming polysaccharide.
· Method indicates a method of stretching the first step mixture in the second step.

"(i)" means the method (i) of stretching the mixture in a direction perpendicular to a plane including a rotation axis of a roller set by pressing the mixture by rollers by passing the mixture through a region surrounded by the roller set in the direction perpendicular to the plane including the rotation axis of the roller set.
"(ii)" means the method (ii) of stretching the mixture in a direction parallel to a rotation axis of a roller set by pressing the mixture by putting the mixture between the roller set having parallel rotation axes and rotating in the same direction while rotating the mixture.
"(iii)" means the method (iii) of stretching the first step mixture by gripping and pulling a surface of the first step mixture.
"(iv)" means the method (iv) of stretching the first step mixture by pressing the first step mixture with a plate.
"(v)" means the method (v) of stretching the first step mixture by pressing the mixture by passing the mixture through a region surrounded by one roller and a guide disposed along a part of an outer circumference of the roller and in which a distance between the roller and the guide is reduced along a direction in which the roller rotates while rotating the first step mixture.
   · "Fig.": In a case in which a specific aspect of the method of stretching the first step mixture in the second step is illustrated in the drawing, the drawing number is shown.
   · "Number of stretching times (number of stages)" indicates the number of times of stretching. Note that the number in parentheses means the number of stages of the roller set in the stretching method (i).
   · "Specific degree of orientation of stretched mixture" means a specific degree of orientation.
   · "Specific integrated degree of orientation of stretched mixture" means a specific integrated degree of orientation.
   · "Specific standard deviation of orientation angle of stretched mixture" means a specific standard deviation of orientation angle.
   · "Coloring" means whether or not a colorant was used in (First Step). The term "present" means that a colorant was used. The term "absent" means that a colorant was not used.

"Degree of orientation in the cross section parallel to fiber axis direction", "Integrated degree of orientation", "Orientation angle standard deviation", "Orientation direction", and "Integrated degree of orientation in cross section perpendicular to fiber axis direction" described in the lower column of "Fibrous texture of chunk meat-like meat alternative" are as follows.
· "Degree of orientation in cross section parallel to fiber axis direction" means a degree of orientation of the fiber direction in the cross section parallel to the fiber axis direction of the fiber bundle-shaped textured protein of the chunk meat-like meat alternative.
· "Integrated degree of orientation" means an integrated degree of orientation of the fiber direction in the cross section parallel to the fiber axis direction of the fiber bundle-shaped textured protein of the chunk meat-like meat alternative.
· "Orientation angle standard deviation" means a standard deviation of the orientation angle of the fiber direction in the cross section parallel to the fiber axis direction of the fiber bundle-shaped textured protein of the chunk meat-like meat alternative.
· "Orientation direction": A case in which the fiber axis direction of the textured protein contained in the chunk meat-like meat alternative is oriented in one direction is described as "thickness" or "width". A case in which the fiber axis direction of the fiber bundle-shaped textured protein contained in the chunk meat-like meat alternative is not oriented in one direction is described as "-".

Note that "thickness direction" means that the fiber axis direction of the fiber bundle-shaped textured protein is oriented in the thickness direction of the chunk meat-like meat alternative.

Note that "width direction" means that the fiber axis direction of the fiber bundle-shaped textured protein is oriented in a direction orthogonal to the thickness direction of the chunk meat-like meat alternative.
· "Degree of orientation in cross section perpendicular to fiber axis direction" means a degree of orientation of the fiber direction in the cross section perpendicular to the fiber axis direction of the fiber bundle-shaped textured protein of the chunk meat-like meat alternative.

From the above results, it can be seen that in the method of producing a chunk meat-like meat alternative of each of Examples, a chunk meat-like meat alternative having an appearance before and after cooking, a cross section after cooking and a texture after cooking are close to those of livestock meat is obtained.

Note that Example 9 is an example in which a chunk meat-like meat alternative is produced without using a colorant in the first step, and the chunk meat-like meat alternative has an appearance close to that of grilled livestock meat even before cooking. Therefore, in the visual evaluation before cooking of Example 9 ("Appearance before cooking" in Table 1), whether or not the fiber direction of the fiber bundle-shaped textured protein contained in the chunk meat-like meat alternative before cooking was oriented in a state close to muscle fibers contained in livestock meat was visually evaluated.

Comparative Example 1 is an example in which the first step mixtures are arranged into a spherical shape and then not stretched. In this case, it can be seen that the "degree of orientation of the fiber direction in the cross section parallel to the fiber axis direction of the fiber bundle-shaped textured protein", the "integrated degree of orientation of the fiber direction in the cross section parallel to the fiber axis direction of the fiber bundle-shaped textured protein", and the "standard deviation of the orientation angle of the fiber direction in the cross section parallel to the fiber axis direction of the fiber bundle-shaped textured protein" of the obtained chunk meat alternative are out of preferred aspects.

Comparative Example 2 is an example in which fiber bundle-shaped textured proteins are stacked so that the fiber directions were aligned to produce a chunk meat alternative, and stretching was also not performed in Comparative Example 2. In this case, the "integrated degree of orientation of the fiber direction in the cross section perpendicular to the fiber axis direction of the fiber bundle-shaped textured protein" of the obtained chunk meat alternative is out of a preferred aspect.

### (Reference Signs List)

1: First step mixture
2, 22, 23, 32, 42: Roller sets
43: Uneven surface with Shape of Spiral
4: Stretched mixture
C: Protruding portion
D: Portion without protrusion
52: Roller
53: Guide

The disclosures of Japanese Patent Application No. 2022-040837 filed on March 15, 2022, Japanese Patent Application No. 2022-040838 filed on March 15, 2022, and Japanese Patent Application No. 2022-171764 filed on October 26, 2022 are incorporated herein by reference in their entirety.

All literatures, patent applications, and technical standards described in the disclosure are incorporated herein by reference to the same extent as if each individual literature, patent application, or technical standard was specifically and individually indicated to be incorporated by reference.

## Claims

1. A method of producing a chunk meat-like meat alternative, the method comprising:
a first step of mixing a fiber bundle-shaped textured protein and a binder to obtain a mixture; and
a second step of stretching the mixture to obtain a stretched mixture having a degree of orientation of a fiber direction of the fiber bundle-shaped textured protein in a cross section along a direction of the stretching of 1.1 or more.

2. The method of producing a chunk meat-like meat alternative according to claim 1, wherein the mixture obtained by the second step has a stretch ratio of 2 or more.

3. The method of producing a chunk meat-like meat alternative according to claim 1, further comprising, after the second step, a third step comprising: molding the stretched mixture to obtain a molded product; and heating the molded product to harden the molded product.

4. The method of producing a chunk meat-like meat alternative according to claim 1, wherein the binder comprises a thermally reversible gel-forming polysaccharide and a thermally irreversible gel-forming polysaccharide.

5. The method of producing a chunk meat-like meat alternative according to claim 1, wherein the second step comprises stretching the mixture in a direction perpendicular to a plane including a rotation axis of a set of rollers, by pressing the mixture by passing the mixture through a region surrounded by the set of rollers in the direction perpendicular to the plane including the rotation axis of the set of rollers.

6. The method of producing a chunk meat-like meat alternative according to claim 1, wherein the second step comprises stretching the mixture in a direction parallel to a rotation axis of a set of rollers, by pressing the mixture by placing the mixture between the set of rollers having parallel rotation axes and rotating in the same direction and reducing a distance between the set of rollers while rotating the mixture.

7. The method of producing a chunk meat-like meat alternative according to claim 6, wherein each roller has an uneven surface with a shape of a spiral, the spiral moving from a center of the roller in a rotation axis direction to both ends of the roller in the rotation axis direction while the roller rotates.

8. The method of producing a chunk meat-like meat alternative according to claim 1, wherein the second step comprises stretching the mixture by gripping and pulling a surface of the mixture.

9. The method of producing a chunk meat-like meat alternative according to claim 1, wherein the second step comprises stretching the mixture by pressing the mixture with a plate.

10. The method of producing a chunk meat-like meat alternative according to claim 5, wherein the second step comprises stretching the mixture by passing the mixture through a plurality of sets of rollers arranged in one direction.

11. The method of producing a chunk meat-like meat alternative according to claim 1, wherein the second step comprises stretching the mixture an operation comprising stretching the mixture, cutting the stretched mixture, stacking stretched mixture cuttings so as to be aligned longitudinally, and stretching the stacked stretched mixture cuttings again.

12. The method of producing a chunk meat-like meat alternative according to claim 3, wherein the third step comprises: a step of cutting the stretched mixture perpendicularly to an orientation direction of fibers; and a step of bundling a plurality of stretched mixtures before cutting or after cutting.

13. A chunk meat-like meat alternative comprising a fiber bundle-shaped textured protein and a binder,
a degree of orientation of a fiber direction in a cross section parallel to a fiber axis direction of the fiber bundle-shaped textured protein being 1.1 or more, and
an integrated degree of orientation of the fiber direction in a cross section perpendicular to the fiber axis direction of the fiber bundle-shaped textured protein being less than 1.4.

14. A chunk meat-like meat alternative comprising a fiber bundle-shaped textured protein and a binder,
an integrated degree of orientation of a fiber direction in a cross section parallel to a fiber axis direction of the fiber bundle-shaped textured protein being 1.1 or more, and
an integrated degree of orientation of the fiber direction in a cross section perpendicular to the fiber axis direction of the fiber bundle-shaped textured protein being less than 1.4.

15. A chunk meat-like meat alternative comprising a fiber bundle-shaped textured protein and a binder,
a standard deviation of an orientation angle of a fiber direction in a cross section parallel to a fiber axis direction of the fiber bundle-shaped textured protein being 20 or less, and
an integrated degree of orientation of the fiber direction in a cross section perpendicular to the fiber axis direction of the fiber bundle-shaped textured protein being less than 1.4.
